(19) Europäisches Patentamt / European Patent Office / Office européen des brevets

(11) **EP 4 382 504 A1**

(12) **EUROPEAN PATENT APPLICATION**
published in accordance with Art. 153(4) EPC

(43) Date of publication:
**12.06.2024 Bulletin 2024/24**

(21) Application number: **22870040.7**

(22) Date of filing: **15.09.2022**

(51) International Patent Classification (IPC):
**C04B 35/486** (2006.01)          **A61C 5/70** (2017.01)
**A61C 13/083** (2006.01)          **C01G 25/02** (2006.01)

(52) Cooperative Patent Classification (CPC):
**A61C 5/70; A61C 13/083; C01G 25/02;
C04B 35/486**

(86) International application number:
**PCT/JP2022/034621**

(87) International publication number:
**WO 2023/042893 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.09.2021 JP 2021150878**

(71) Applicant: **Tosoh Corporation
Yamaguchi 746-8501 (JP)**

(72) Inventors:
• **AZECHI Sho
Shunan-shi, Yamaguchi 746-8501 (JP)**

• **HIGUCHI Yuya
Shunan-shi, Yamaguchi 746-8501 (JP)**
• **FUJISAKI Hiroyuki
Tokyo 105-8623 (JP)**
• **NAGAYAMA Hitoshi
Shunan-shi, Yamaguchi 746-8501 (JP)**
• **KAWAMURA Kiyotaka
Shunan-shi, Yamaguchi 746-8501 (JP)**

(74) Representative: **Müller-Boré & Partner
Patentanwälte PartG mbB
Friedenheimer Brücke 21
80639 München (DE)**

(54) **POWDER COMPOSITION, CALCINED BODY, SINTERED BODY, AND METHOD FOR PRODUCING SAME**

(57)     Provided is a powder composition that includes, as a matrix, a zirconia having a high content of a stabilizing element and that can provide, through short-time sintering, a sintered body satisfying translucency and mechanical strength required for dental prosthetic materials, in particular, prosthetic anterior teeth. Provided is a powder composition including two or more stabilized zirconias having different contents of a stabilizing element, in which the powder composition has a content of the stabilizing element of more than 4.0 mol% and 5.8 mol% or less, a rate of change in thermal shrinkage rate per unit temperature at 1,300°C is 0.07%°C$^{-1}$ or less, and the contents of the stabilizing element of the stabilized zirconias are each 8.0 mol% or less.

*Fig.3*

EP 4 382 504 A1

**Description**

**Technical Field**

The present disclosure relates to a powder composition, a calcined body and a sintered body that include zirconia as a main component, and a method for producing the same.

**Background Art**

Sintered bodies including zirconia as a matrix (base material) and used for applications of dental prosthetic materials, such as crowns and bridges, are required to have aesthetic qualities equivalent to natural teeth. To meet this requirement, improving translucency of sintered bodies by increasing the content of a stabilizing element has been studied (PTL 1).

However, as the content of the stabilizing element increases, mechanical strength of such sintered bodies including zirconia as a matrix significantly decreases. To address this issue, there is disclosed a sintered body that contains crystal grains having different contents of a stabilizing element in the sintered body to thereby satisfy high mechanical strength required for a dental prosthetic material in spite of a stabilizing element content that is considered to cause a decrease in mechanical strength (PTL 2).

On the other hand, the sintered bodies described in PTL 1 and PTL 2 are produced by sintering that requires two hours of holding time at a maximum temperature and seven hours or more for temperature increasing, holding and temperature decreasing (hereinafter also referred to as "normal sintering"). Therefore, the production of these sintered bodies requires long sintering times.

In recent years, dental treatment, so called chair-side treatment, using a sintered body produced by applying a sintering method, so called short-time sintering, which takes less time required for sintering than the normal sintering, has been studied. It is expected that the burden of hospital visits for patients is reduced by the chair-side treatment.

PTL 3 discloses, as a sintered body obtained by short-time sintering, a sintered body including zirconia having a content of a stabilizing element of 4 mol% to 6 mol% and serving as a matrix and undissolved yttria. PTL 4 discloses, as a sintered body obtained by short-time sintering, a sintered body that includes 4 mol% to 5.5 mol% of zirconia serving as a matrix and that has a contrast ratio of 0.68 to 0.70.

**Citation List**

**Patent Literature**

PTL 1: Japanese Unexamined Patent Publication No. 2015-143178
PTL 2: Japanese Unexamined Patent Publication No. 2021-059489
PTL 3: International Publication No. 2018/056330
PTL 4: Japanese Unexamined Patent Publication No. 2020-033338

**Summary of Invention**

**Technical Problem**

The sintered body of PTL 3 does not have sufficient mechanical strength because it contains undissolved yttria. In PTL 4, even when a sintered body having a high yttria content was produced by short-time sintering, the obtained sintered body did not have translucency applicable to prosthetic anterior teeth, and furthermore, had translucency substantially the same as that of a sintered body having an yttria content of 4 mol% and obtained by normal sintering. An object of the present disclosure is to provide at least one of a powder composition and a calcined body that include, as a matrix, a zirconia having a high content of a stabilizing element and that can provide, through short-time sintering, a sintered body that satisfies translucency and mechanical strength required for dental prosthetic materials, in particular, prosthetic anterior teeth and methods for producing the same.

**Solution to Problem**

The inventors of the present invention have studied on sintering of powders and calcined bodies that include, as a matrix, a zirconia having a high content of a stabilizing element. As a result, it has been found that even when short-time sintering is simply applied to such powders and calcined bodies that include, as a matrix, a zirconia having a high content of a stabilizing element, sintered bodies having translucency equivalent to that of sintered bodies obtained by normal sintering and, furthermore, sintered bodies having characteristics applicable to prosthetic anterior teeth are unlikely to be obtained. Moreover, the inventors of the present invention have found that the sintering behavior in the first half of sintering significantly affects densification in short-time sintering.

On the basis of the above findings, the inventors have focused on the surface activity of each particle constituting a powder and a calcined body, and consequently, conceived that particles having different surface activities are caused to coexist so as to have a specific relationship and the state of interfaces between the particles is changed. Consequently, it has been found that this enables the sintering behavior in the first half of sintering to be controlled. This results in the completion of a powder composition and a calcined body according to the present disclosure, the powder composition and calcined body being capable of providing a sintered body including, as a matrix, a zirconia having a high content of a stabilizing element and satisfying translucency required for dental prosthetic materials, in particular, prosthetic anterior teeth even when a sintering method applicable to chair-side treatment is applied.

Specifically, the present invention is defined in the claims, and the gist of the present disclosure is as follows.

[1] A powder composition including two or more stabilized zirconias having different contents of a stabilizing element, in which the powder composition has a content of the stabilizing element of more than 4.0 mol% and 5.8 mol% or less, a rate of change in thermal shrinkage rate per unit temperature at 1,300°C is 0.07%°C$^{-1}$ or less, and the contents of the stabilizing element of the stabilized zirconias are each 8.0 mol% or less.

[2] The powder composition according to [1] above, in which the stabilized zirconias include a first stabilized zirconia having a content of the stabilizing element of 1.0 mol% or more and 5.0 mol% or less and a second stabilized zirconia having a content of the stabilizing element of 3.0 mol% or more and 8.0 mol% or less.

[3] The powder composition according to [1] or [2] above, in which a rate of change in thermal shrinkage rate per unit temperature at 1,500°C is 0.02%°C$^{-1}$ or more.

[4] The powder composition according to any one of [1] to [3] above, in which the stabilizing element is one or more selected from the group consisting of yttrium, calcium, and magnesium.

[5] The powder composition according to any one of [1] to [4] above, in which a BET specific surface area is 8 m$^2$/g or more and 13 m$^2$/g or less.

[6] The powder composition according to any one of [1] to [5] above, in which a proportion of a tetragonal phase and a cubic phase in a crystalline phase is 65% or more.

[7] A calcined body including two or more stabilized zirconias having different contents of a stabilizing element, in which the calcined body has a content of the stabilizing element of more than 4.0 mol% and 5.8 mol% or less, a rate of change in thermal shrinkage rate per unit temperature at 1,300°C is 0.07%°C$^{-1}$ or less, and the contents of the stabilizing element of the stabilized zirconias are each 8.0 mol% or less.

[8] The calcined body according to [7] above, in which the stabilized zirconias include a first stabilized zirconia having a content of the stabilizing element of 1.0 mol% or more and 5.0 mol% or less and a second stabilized zirconia having a content of the stabilizing element of 3.0 mol% or more and 8.0 mol% or less.

[9] The calcined body according to [7] or [8] above, in which a rate of change in thermal shrinkage rate per unit temperature at 1,500°C is 0.02%°C$^{-1}$ or more.

[10] The calcined body according to any one of [7] to [9] above, in which the stabilizing element is one or more selected from the group consisting of yttrium, calcium, and magnesium.

[11] The calcined body according to any one of [7] to [10] above, in which a proportion of a tetragonal phase and a cubic phase in a crystalline phase is 75% or more.

[12] A method for producing a sintered body, the method including using the powder composition according to any one of [1] to [6] above or the calcined body according to any one of [7] to [11] above.

[13] A sintered body in a state in which the powder composition according to any one of [1] to [6] above is sintered.

[14] A sintered body in a state in which the calcined body according to any one of [7] to [11] above is sintered.

[15] A sintered body including, as a matrix, a zirconia containing a stabilizing element, in which a content of the stabilizing element is more than 4.0 mol% and 5.8 mol% or less, an average crystal grain size is 2.5 μm or less, a difference in crystal grain size is 0.10 μm or less, and a tetragonal prime phase fraction is 70% or more.

**Advantageous Effects of Invention**

The present disclosure achieves the object of providing at least one of a powder composition and a calcined body that include, as a matrix, a zirconia having a high content of a stabilizing element and that can provide, through short-time sintering, a sintered body that satisfies translucency required for dental prosthetic materials, in particular, prosthetic anterior teeth and methods for producing the same.

**Brief Description of Drawings**

[Fig. 1] Fig. 1 is an example of a TEM observation image used in STEM-EDS measurement.

[Fig. 2]Fig. 2 is an example of a TEM observation image used in STEM-EDS measurement.

[Fig. 3] Fig. 3 is a graph showing a frequency distribution of a stabilizing element content of a powder composition obtained in Example 2.

[Fig. 4] Fig. 4 is a graph showing a frequency distribution of a stabilizing element content of a calcined body obtained in Example 11.

[Fig. 5] Fig. 5 is a graph showing a frequency distribution of a stabilizing element content of a calcined body obtained in Comparative Example 9.

**Description of Embodiments**

A powder composition according to the present disclosure will be described with reference to an exemplary embodiment. The definitions of terms in the present embodiment are as follows.

The term "composition" refers to a substance having a certain chemical composition. The substance is, for example, one or more selected from the group consisting of a powder, a granule, a green body, a calcined body, and a sintered body. The term "zirconia composition" refers to a composition consisting essentially of zirconia and further refers to a composition including zirconia as a matrix (base material).

The term "powder" refers to a composition formed of a collection of powder particles (powdered particles) and having fluidity. The term "zirconia powder" refers to a powder consisting essentially of zirconia and further refers to a powder including zirconia as a matrix (base material). The term "powder composition" refers to a composition formed of powders having different characteristics and, in particular, refers to a composition including powders having different chemical compositions.

The term "granular powder" refers to a composition formed of a collection of aggregates of powder particles and having fluidity and, in particular, refers to a composition in which powdered particles are loosely aggregated. The term "zirconia granular powder" refers to a granular powder consisting essentially of zirconia and further refers to a granular powder including zirconia as a matrix (base material).

The term "green body" refers to a composition formed of powder particles aggregated by physical force and having a certain shape and, in particular, refers to a composition that has not been subjected to heat treatment after the shape is provided (for example, after molding). The term "zirconia green body" refers to a green body consisting essentially of zirconia and further refers to a green body including zirconia as a matrix (base material). The term green body is used interchangeably with the term "green compact".

The term "calcined body" refers to a composition formed of fused particles and having a certain shape and refers to a composition subjected to heat treatment at a temperature lower than a sintering temperature. The term "zirconia calcined body" refers to a calcined body consisting essentially of zirconia and further refers to a calcined body including zirconia as a matrix (base material).

The term "sintered body" refers to a composition formed of crystal grains and having a certain shape and refers to a composition subjected to heat treatment at a temperature equal to or higher than a sintering temperature. The term "zirconia sintered body" refers to a sintered body consisting essentially of zirconia and further refers to a sintered body including zirconia as a matrix (base material).

The term "stabilizing element" refers to an element that dissolves in zirconia to exhibit the function of stabilizing the crystalline phase of zirconia.

The content of a stabilizing element (mol%; hereinafter also referred to as a "stabilizing element content") in a composition (example: a powder composition, a calcined body, or a sintered body) is a molar ratio of the stabilizing element in terms of oxide relative to the total of zirconium in terms of $ZrO_2$ and the stabilizing element in terms of oxide in the composition. For example, when only yttrium is contained as the stabilizing element, the stabilizing element content (yttrium content) is the molar proportion of yttria ($Y_2O_3$) relative to the total of zirconium in terms of $ZrO_2$ and yttrium in terms of oxide (that is, yttria: $Y_2O_3$) in the composition.

The term "amount of change in thermal shrinkage rate per unit temperature (hereinafter also referred to as a "rate of change in thermal shrinkage rate" or "ΔV")" refers to a physical property inherent to a composition and to an amount of change in thermal shrinkage rate of the composition per unit temperature at a specified temperature. The rate of change in thermal shrinkage rate in the present embodiment is determined from a formula below.

$$\Delta V = \Delta L / \Delta T$$

$$= \{|L(T2) - L(T1)|\}/(T2 - T1)$$

In the above formula, $\Delta V$ is a rate of change [%°C$^{-1}$] in thermal shrinkage rate, $\Delta T$ is a difference [°C] between a temperature T1 and a temperature T2, and T2 - T1 = 3 $\pm$ 0.5 [°C]. $\Delta L$ is a difference [%] between a thermal shrinkage rate (L(T1)) at the temperature T1 and a thermal shrinkage rate (L(T2)) at the temperature T2.

A thermal shrinkage rate L(T) [%] at a temperature T is determined by a formula (1) using measurement results of an amount of thermal shrinkage ($l - l_0$) in a temperature-increasing process.

[Math. 1]

$$L(T) = \frac{100 \times (l - l_0)}{l_0} + \frac{100 - \{100 \times \frac{l - l_0}{l_0}\}}{1 + \beta(T - T_0)} \times \{\beta(T - T_0)\} \qquad (1)$$

In the formula (1), L(T) is a thermal shrinkage rate [%] at a temperature T, $l$ is a length [mm] of a green body at the temperature T, $l_0$ is a length [mm] of the green body before heating treatment, T is a measurement temperature [°C], $T_0$ is a temperature [°C] at the start of measurement and $\beta$ is a coefficient (11.1 $\times$ 10$^{-6}$ °C$^{-1}$).

The amount of thermal shrinkage is determined by measurement of the amount of thermal shrinkage using a typical thermal dilatometer (for example, TD5000SE, manufactured by NETZSCH). Conditions for the measurement of the amount of thermal shrinkage are, for example, the following conditions.

| | |
|---|---|
| Atmosphere : | Under air circulation (100 mL/min) |
| Rate of temperature increase : | 20 °C/min |
| Maximum temperature reached: | 1,600°C |
| Measurement sample : | Green body |
|     Diameter | 6 mm |
|     Length | 15 $\pm$ 2 mm |
|     Shape | Cylindrical shape |
| Standard sample : | Alumina |
|     Diameter | 6 mm |
|     Length | (Length of measurement sample) - (1.5 $\pm$ 0.5) mm |
| Shape | Cylindrical shape |

The green body provided as the measurement sample may be a green body obtained by filling a die with a powder sample, uniaxially compacting the powder sample at a pressure of 19.6 MPa, and subsequently performing CIP treatment at a pressure of 196 MPa or a calcined body obtained by calcining the green body. When the green body contains a molding aid, the measurement sample (green body) may be heat-treated in an air atmosphere at 700°C for one hour prior to the measurement.

In the measurement of the amount of thermal shrinkage, the temperature of the measurement sample may be increased while a load of 0.01 kilogram-force is applied in a length direction of the measurement sample. After the start of the temperature increase, a temperature T and a length (1) of the measurement sample at the temperature are measured every 3 seconds, and L(T) is determined from the formula (1) above. $\Delta L$ is derived from L(T) at two temperatures T1 and T2 that satisfy the relation of $\Delta T = 3 \pm 0.5$°C.

In the measurement of the amount of thermal shrinkage, alumina is used as the standard sample. Thermal expansion of the standard sample may be corrected with typical analysis software for thermal analysis (for example, analysis software for TD5000SE, Ver. 5.0.2, manufactured by NETZSCH).

The "BET specific surface area" may be measured in accordance with JIS R 1626 by a multi-point BET method (five points) using nitrogen as an adsorption gas. Specific measurement conditions for the BET specific surface area can be, for example, the following conditions.

| | |
|---|---|
| Adsorption medium : | N$_2$ |
| Adsorption temperature : | -196°C |
| Pretreatment condition : | Degassing treatment in an air atmosphere at 250°C for one hour or more |

The BET specific surface area can be measured with a typical device (for example, TriStar II 320, manufactured by Shimadzu Corporation).

The term "tetragonal phase and cubic phase fraction (hereinafter also referred to as a "T + C phase fraction")" refers to the total proportion of the tetragonal phase and the cubic phase in the crystalline phase and to a value determined by a formula (2) from a powder X-ray diffraction (hereinafter also referred to as "XRD") pattern of a composition.

$$f_{T+C} = [I_t(111) + I_c(111)]/[I_m(111) + I_m(11\text{-}1) + I_t(111) + I_c(111)]$$

$$(2)$$

In the formula (2), $f_{T+C}$ denotes a tetragonal phase and cubic phase fraction, $I_t(111)$ denotes an integrated intensity of the tetragonal (111) plane, $I_c(111)$ denotes an integrated intensity of the cubic (111) plane, $I_m(111)$ denotes an integrated intensity of the monoclinic (111) plane, and $I_m(11\text{-}1)$ denotes an integrated intensity of the monoclinic (11-1) plane.

The integrated intensities of crystal planes can be determined by subjecting the XRD pattern to smoothing treatment and background subtraction treatment and then subjecting the resulting XRD pattern to profile-fitting using a split pseudo-Voigt function. The analysis of the XRD pattern, such as the smoothing treatment, the background treatment and the calculations of the integrated intensities, may be performed using analysis programs attached to an X-ray diffractometer (for example, Integrated X-ray powder diffraction software PDXL Ver. 2.2, manufactured by Rigaku Corporation).

The XRD pattern in the present embodiment is preferably obtained by XRD measurement under the following conditions.

| | |
|---|---|
| Radiation source : | CuK$\alpha$ radiation ($\lambda$ = 0.15418 nm) |
| Measurement mode : | Continuous scanning |
| Scanning speed : | 2 °/min |
| Measurement range : | 2$\theta$ = 26° to 33° |
| | 2$\theta$ = 72° to 76° |
| Accelerating voltage-electric current : | 40 mA-40 kV |
| Divergence height limiting slit : | 10 mm |
| Divergence/incident slit : | 1° |
| Light-receiving slit : | Open |
| Detector : | Semiconductor detector (D/teX Ultra) |
| Filter : | Ni filter |
| Goniometer radius : | 185 mm |

The XRD measurement can be performed with a typical X-ray diffractometer (for example, Ultima IV, manufactured by Rigaku Corporation). When the composition is a calcined body, a surface of the calcined body may be polished with sandpaper having a grain size of #400 according to JIS R 6001-2 and then subjected to lap-polishing with a diamond abrasive having a grain size of 3 $\mu$m, and the XRD measurement of the resulting surface may be performed. When the composition is a sintered body, a surface of the sintered body may be polished to a surface roughness Ra of 0.02 $\mu$m or less, and the XRD measurement of the resulting surface may be performed.

The XRD peaks corresponding to the crystal planes of zirconia measured in the above-described XRD measurement are, for example, XRD peaks having the peak tops at 2$\theta$ below.

XRD peak corresponding to monoclinic (111) plane : 2$\theta$ = 31 $\pm$ 0.5°
XRD peak corresponding to monoclinic (11-1) plane : 2$\theta$ = 28 $\pm$ 0.5°
XRD peak corresponding to tetragonal (111) plane : 2$\theta$ = 30 $\pm$ 0.5°
XRD peak corresponding to cubic (111) plane : 2$\theta$ = 30 $\pm$ 0.5°

The XRD peak corresponding to the tetragonal (111) plane and the XRD peak corresponding to the cubic (111) plane are measured as one overlapping peak. Thus, $I_t(111) + I_c(111)$ in the above formula may be determined from the integrated intensity of one XRD peak having a peak top at $2\theta = 30 \pm 0.5°$.

The term "tetragonal prime phase fraction (hereinafter also referred to as a "T' phase fraction")" refers to the proportion of the tetragonal prime phase in the crystalline phase, and the term "cubic phase fraction (hereinafter also referred to as a "C phase fraction")" refers to the proportion of the cubic phase in the crystalline phase. These are values determined by a formula (3) and a formula (4) from an XRD pattern of a surface of a sintered body.

$$f_{T'} = [I_{t'}(004) + I_{t'}(400)] / [I_t(004) + I_t(400) + I_{t'}(004) + I_{t'}(400) + I_c(400)] \qquad (3)$$

$$f_C = [I_c(400)]/[I_t(004) + I_t(400) + I_{t'}(004) + I_{t'}(400) + I_c(400)] \qquad (4)$$

In the formula (3) and the formula (4), $f_{T'}$ denotes the T' phase fraction, $f_C$ denotes the C phase fraction, $I_{t'}(004)$ denotes an integrated intensity of the tetragonal prime (004) plane, $I_{t'}(400)$ denotes an integrated intensity of the tetragonal prime (400) plane, $I_t(004)$ denotes an integrated intensity of the tetragonal (004) plane, $I_t(400)$ denotes an integrated intensity of the tetragonal (400) plane, and $I_c(400)$ denotes an integrated intensity of the cubic (400) plane.

The XRD pattern and the integrated intensities of crystal planes may be determined by the same method as that described in the formula (2).

The XRD peaks corresponding to the crystal planes measured in the above-described XRD measurement are, for example, XRD peaks having the peak tops at $2\theta$ below.

XRD peak corresponding to tetragonal (004) plane : $2\theta = 72.9 \pm 0.1°$
XRD peak corresponding to tetragonal prime (004) plane: $2\theta = 73.3 \pm 0.1°$
XRD peak corresponding to tetragonal prime (400) plane: $2\theta = 73.9 \pm 0.1°$
XRD peak corresponding to tetragonal (400) plane : $2\theta = 74.3 \pm 0.1°$
XRD peak corresponding to cubic (400) plane : $2\theta = 73.7 \pm 0.05°$

The "average particle size" is D50 in a volumetric particle size distribution of a powder or a powder composition measured by a wet method and can be measured with a typical apparatus (for example, MT3300EXII, manufactured by MicrotracBEL Corp.). The measurement sample used may be a slurry prepared by dispersing, in pure water, a powder from which loose aggregation has been removed by dispersion treatment such as ultrasonic treatment. In the measurement of the volumetric particle size distribution by the wet method, the slurry is preferably adjusted such that pH = 3.0 to 6.0.

The "average granule size" is D50 in a volumetric particle size distribution of a granular powder measured by a dry method and can be measured with a typical apparatus (for example, MT3100II, manufactured by MicrotracBEL Corp.). As a measurement sample, a granular powder in the state of loose aggregation may be used as it is without performing dispersion treatment such as ultrasonic treatment.

The "average crystal grain size" refers to an average size based on the number of crystal grains constituting a sintered body and is obtained by image analysis of a scanning electron microscope (hereinafter also referred to as "SEM") observation image obtained by observing, with a SEM, a region extending from a surface of the sintered body to 1% from the surface in the thickness direction of the sintered body. Specifically, a section of a sintered body is used as an observation sample, and any region extending from a surface of the sintered body to 1% from the surface in the thickness direction of the sintered body is observed with a SEM to obtain a SEM observation image.

The SEM observation may be performed with a typical scanning electron microscope (for example, JSM-IT500LA, manufactured by JEOL Ltd.). In the SEM observation, the observation magnification may be appropriately set such that the number of crystal grains to be subjected to image analysis (crystal grains observed without discontinuation of crystal grain boundaries in the SEM observation image (described later)) becomes $450 \pm 50$. In order to reduce a variation in the crystal grains observed due to the difference in position of the SEM observation, SEM observation images are preferably prepared such that the total number of crystal grains observed in two or more, preferably three or more and five or less SEM observation images becomes the above-described number of crystal grains. Conditions for the SEM observation are, for example, the following conditions.

Accelerating voltage :          15 kV
Observation magnification :      5,000 times to 10,000 times

Prior to the measurement, a section of a sintered body may be mirror-polished so as to have a surface roughness Ra of 0.02 $\mu$m or less, and then subjected to thermal etching at a temperature 100°C lower than the sintering temperature for 30 minutes to prepare a measurement sample.

The image analysis of a SEM observation image may be performed using image analysis software (for example, Mac-View Ver. 5, manufactured by MOUNTECH Co., Ltd.). Specifically, crystal grains observed without discontinuation of crystal grain boundaries in the SEM observation image are extracted, and the area [$\mu$m$^2$] of each of the extracted crystal grains is determined. From the determined area, the diameter [$\mu$m] of a circle having an area equal to the above determined area is converted, and the obtained diameter (Heywood diameter; hereinafter also referred to as an "equivalent circle diameter") may be regarded as the crystal grain size of the crystal grain. The average value of the equivalent circle diameters of the extracted crystal grains may be defined as the average crystal grain size of the sintered body.

The term "green body density" refers to an actually measured density [g/cm$^3$] of a green body and to the mass [g] of the green body obtained by mass measurement with a balance relative to the volume [cm$^3$] of the green body determined from dimensions measured with a vernier caliper.

The term "calcined body density" refers to an actually measured density [g/cm$^3$] of a calcined body and to the mass [g] of the calcined body obtained by mass measurement with a balance relative to the volume [cm$^3$] of the calcined body determined from dimensions measured with a vernier caliper.

The term "Vickers hardness" refers to a value measured with a typical Vickers tester (for example, Q30A, manufactured by Qness) equipped with a square pyramidal diamond indenter. In the measurement, the indenter is statically pressed onto a surface of a measurement sample, and the diagonal length of an indentation mark formed on the surface of the measurement sample is measured. The Vickers hardness may be determined from the diagonal length using a formula (5).

$$Hv = F/\{d^2/2\sin(\alpha/2)\} \quad (5)$$

In the formula (5), Hv denotes the Vickers hardness (HV), F denotes the measurement load (1 kgf), d denotes the diagonal length of the indentation mark (mm), and $\alpha$ denotes the angle between opposite faces of the indenter (136°).

Measurement conditions for the Vickers hardness are, for example, the following conditions.

| Measurement sample : | A disk shape with a thickness of 3.0 $\pm$ 0.5 mm |
|---|---|
| Measurement load : | 1 kgf |

Prior to the measurement, pretreatment may be performed by polishing the measurement surface of the measurement sample with #800 waterproof abrasive paper to remove irregularities exceeding 0.1 mm.

The term "light transmittance" refers to a total light transmittance measured for a measurement sample having a sample thickness of 1 mm in accordance with JIS K 7361-1. The light transmittance may be measured using, as a measurement sample, a disk-shaped sintered body having a sample thickness of 1 mm and having both surfaces with a surface roughness Ra of 0.02 $\mu$m or less and using, as a measuring device, a haze meter (for example, Haze meter NDH4000, manufactured by Nippon Denshoku Industries Co., Ltd.) equipped with a D65 light source as a light source.

The term "biaxial flexural strength" refers to a value determined by a two-point bending test according to JIS T 6526. The measurement of the biaxial flexural strength may be performed 10 times using, as a measurement sample, a circular sintered body with a diameter of 14.5 mm $\pm$ 0.5 mm and a thickness of 1.25 mm $\pm$ 0.05 mm under the conditions of a support circle radius of 6 mm and an indenter radius of 0.7 mm, and the average value obtained in this case may be defined as the biaxial flexural strength of the sintered body.

The term "Weibull coefficient" refers to a value calculated by a method according to JIS R 1625. Specifically, the measurement of the biaxial flexural strength is performed 15 times using, as a measurement sample, a disk-shaped sintered body with a diameter of 14.5 mm $\pm$ 0.5 mm and a thickness of 1.25 mm $\pm$ 0.05 mm under the conditions of a support circle radius of 6 mm and an indenter radius of 0.7 mm. Subsequently, the obtained measured strengths are ranked in the ascending order. The n-th lowest measured intensity $\sigma_i$ may be defined as $\sigma_n$. For example, the lowest measured intensity $\sigma_i$ may be defined as $\sigma_1$, the second lowest measured intensity $\sigma_i$ may be defined as $\sigma_2$, $\cdots$ and the fifteenth lowest measured intensity $\sigma_i$ may be defined as $\sigma_{15}$. Next, $\ln(1/\ln(1 - F_i))$ is plotted on the vertical axis, and $\ln(\sigma_i)$ is plotted on the horizontal axis using the data ranked in the ascending order to determine a regression line, and the slope of the regression line may be defined as the Weibull coefficient. Here, i denotes a ranking when ranking is performed in the ascending order, $\sigma_i$ denotes a measured intensity and $F_i$ denotes a cumulative failure probability, and $F_i$ may be determined by the following formula. In the formula below, N denotes the number of measurement samples.

$$\{F_i = (i - 0.3)/(N + 0.4)\}$$

The term "pressureless sintering" refers to a method of sintering an object to be sintered (such as a green body or a calcined body) by heating without applying an external force to the object during sintering. The term "sintering temperature" refers to a maximum temperature reached during sintering, and the term "sintering time" refers to a time during which the sintering temperature is held.

The powder composition of the present embodiment is a powder composition including two or more stabilized zirconias having different contents of a stabilizing element, in which a content of the stabilizing element in the powder composition is more than 4.0 mol% and 5.8 mol% or less, a rate of change in thermal shrinkage rate per unit temperature at 1,300°C is 0.07%°C$^{-1}$ or less, and the contents of the stabilizing element of the two or more stabilized zirconias are each 8.0 mol% or less. The powder composition may be a powder composition of stabilized zirconias. From the viewpoint of sufficiently increasing the light transmittance of sintered bodies, the total proportion of the two or more stabilized zirconias in the powder composition may be 90 mass% or more, 95 mass% or more, or 98 mass% or more and may be 100 mass% or less or less than 100 mass%.

The powder composition of the present embodiment includes a first stabilized zirconia and a second stabilized zirconia each having a content of the stabilizing element of 8.0 mol% or less. The first stabilized zirconia and the second stabilized zirconia have contents of the stabilizing element different from each other. For example, the contents of the stabilizing element of the first stabilized zirconia and the second stabilized zirconia may each be 8.0 mol% or less. The content of the stabilizing element relative to the total of the first stabilized zirconia and the second stabilized zirconia may be more than 4.0 mol% and 5.8 mol% or less. In the powder composition, the rate of change in thermal shrinkage rate per unit temperature at 1,300°C may be 0.02%°C$^{-1}$ or more.

The powder composition of the present embodiment includes two or more stabilized zirconias (for example, a first stabilized zirconia and a second stabilized zirconia) having different contents of a stabilizing element (hereinafter, a content of a stabilizing element is also referred to as a "stabilizing element content", and when the stabilizing element is yttrium or the like, the content is also referred to as an "yttrium content" or the like). This provides a powder composition in which particles (powder particles) having different surface activities coexist. A powder composition that does not include stabilized zirconias having different stabilizing element contents cannot provide a sintered body having translucency suitable for prosthetic anterior teeth through short-time sintering, even if the powder composition satisfies $\Delta V_{1300}$ (described later).

The fact that the powder composition of the present embodiment includes two or more stabilized zirconias having different stabilizing element contents can be confirmed by STEM-EDS of the powder composition.

When a powder composition that does not include stabilized zirconias having different stabilizing element contents is measured by STEM-EDS, a distribution width of the stabilizing element content of powder particles is less than ± 1.0 mol% (that is, the difference between the maximum value and the minimum value of the stabilizing element content of powder particles is less than 2.0 mol%). In this case, the distribution profile of the stabilizing element content may be a monodispersed profile. In contrast, the powder composition of the present embodiment satisfies at least one of conditions that the distribution width of the stabilizing element content is ± 1.0 mol% or more (that is, the difference between the maximum value and the minimum value of the stabilizing element content of powder particles is 2.0 mol% or more) and that the distribution profile of the stabilizing element content is multimodal (for example, bimodal). In the powder composition of the present embodiment, preferably, the distribution width of the stabilizing element content of powder particles is ± 1.0 mol% or more, and the distribution profile of the stabilizing element content is multimodal. Furthermore, in the powder composition of the present embodiment, the distribution profile in the distribution of the stabilizing element content is preferably bimodal.

The STEM-EDS measurement may be determined from a TEM observation image and a STEM-EDS elemental map of a powder composition. Specifically, in a TEM observation image, powder particles of zirconia observed without overlapping each other are selected. The number of powder particles selected may be 20 ± 10, and a plurality of TEM observation images (for example, 3 ± 2 images) may be used. In the selected powder particles, an EDS spectrum at each measurement point of a STEM-EDS elemental map is integrated to obtain an EDS spectrum of the powder particles.

Next, for the obtained EDS spectrum, the molar ratio (molar proportion) of a stabilizing element relative to the total of zirconium and the stabilizing element is calculated from a peak intensity of zirconium and a peak intensity of the stabilizing element using a relative sensitivity factor. Since the relative sensitivity factor is a value specific to a STEM-EDS device, the value in the STEM-EDS device used in the measurement may be used. This value can also be confirmed by, for example, the manual of the device. The stabilizing element content is determined by converting zirconium and the stabilizing element into oxides using the obtained molar ratio. The stabilizing element content is a molar proportion (mol%) of the stabilizing element in terms of oxide relative to the total of zirconium in terms of oxide and the stabilizing element in terms of oxide.

For example, when the stabilizing element is yttrium, a peak intensity of zirconium (Zr) and a peak intensity of yttrium (Y) of a powder particle are determined, and the ratio of the peak intensity of yttrium to the peak intensity of zirconium is calculated. From the ratio of the peak intensity of yttrium to the peak intensity of zirconium, the molar ratio of yttrium to zirconium is determined by correction with the relative sensitivity factor. Zirconium and yttrium are each converted into an oxide using the molar ratio. In this manner, the yttrium content of the powder particle, that is, the molar ratio [mol%] of yttrium in terms of $Y_2O_3$ to the total of zirconium in terms of $ZrO_2$ and yttrium in terms of $Y_2O_3$ in the powder particle may be determined. The stabilizing element contents of a sufficient number of powder particles (for example, $20 \pm 10$ particles) of zirconia may be determined, and the difference between the maximum value and the minimum value may be defined as the distribution width of the stabilizing element content of the powder composition. In addition, the distribution profile of the stabilizing element content may be checked by, for example, a graph or histogram in which the relationship between a stabilizing element content of a powder particle and the frequency of the powder particle having the stabilizing element content is plotted.

In the present embodiment, the STEM-EDS measurement may be performed using a typical transmission electron microscope (for example, TEM: JEM-2100F, manufactured by JEOL Ltd.) and a typical energy dispersive X-ray spectrometer (for example, JED-2300T, manufactured by JEOL Ltd.). Conditions for the TEM observation are, for example, the following conditions.

| | |
|---|---|
| Accelerating voltage : | 200 kV |
| Observation magnification : | 50,000 times to 500,0000 times |

Pretreatment may be performed as follows: After a powder composition is disintegrated in a mortar, loose aggregation is removed by dispersion treatment such as ultrasonic treatment, the resulting powder is dispersed in acetone to prepare a slurry, and the slurry is dried on a collodion membrane.

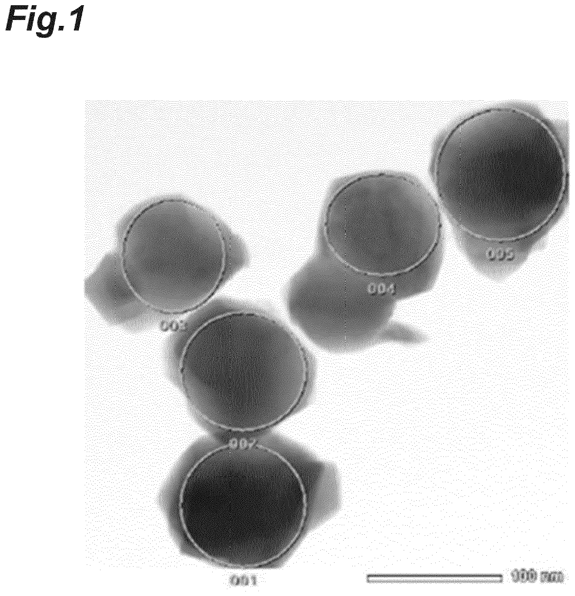

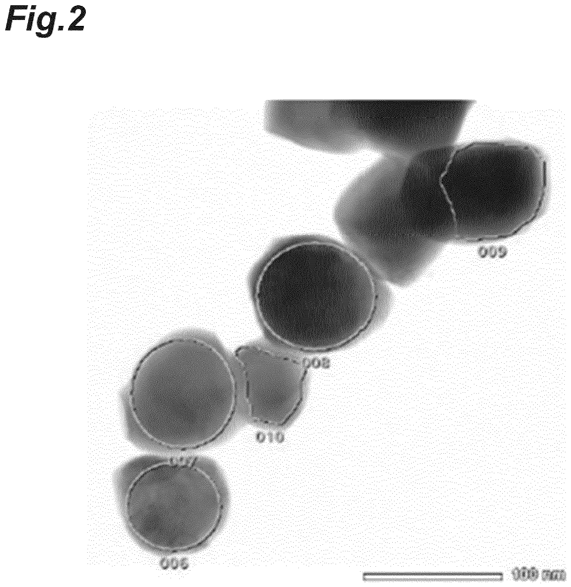

Figs. 1 and 2 are examples of the TEM observation image used in the STEM-EDS measurement. As shown in Figs. 1 and 2, the measurement can be performed in portions surrounded by curved lines of respective powder particles observed without overlapping to determine the stabilizing element contents. The three-digit numbers in Figs. 1 and 2 are numbering. The chemical compositions of $20 \pm 10$ powder particles may be measured using a plurality of TEM observation images as needed.

In this manner, the powder composition of the present embodiment can be confirmed to include two or more stabilized zirconias having different stabilizing element contents due to the fact that the difference between the maximum value and the minimum value (distribution width) of the content of the stabilizing element of powder particles of zirconia measured in the STEM-EDS measurement is 2.0 mol% or more (the distribution width of the stabilizing element content is the median $\pm$ 1.0 mol% or more). For example, in the STEM-EDS measurement of a powder composition, when the minimum value of the stabilizing element content is 2 mol% and the maximum value is 5 mol%, the stabilizing element content of the first stabilized zirconia is 2 mol%, the stabilizing element content of the second stabilized zirconia is 5 mol%, and the difference between the stabilizing element contents is 3 mol%. Accordingly, it can be confirmed that the powder composition includes two or more stabilized zirconias having different stabilizing element contents.

Note that, in the powder composition of the present embodiment, preferably, stabilized zirconias having different stabilizing element contents are uniformed dispersed (that is, the distribution of the first stabilized zirconia and the second stabilized zirconia is uniform). For example, a plurality of stabilized zirconia particles having stabilizing element contents different from each other are preferably distributed with high uniformity. Whether the distribution is uniform or not can be evaluated by repeatedly performing the measurement of the stabilizing element content by STEM-EDS measurement multiple times (for example, three times or more) using different TEM observation images, and determining the variation in the difference between the maximum value and the minimum value of the stabilizing element contents obtained in each measurement. That is, when the variation in the difference between the maximum value and the minimum value of measured values of the stabilizing element content obtained by STEM-EDS measurement (the variation in the multiple times of measurement) is sufficiently small (for example, less than $\pm$ 1 mol%, or less than $\pm$ 0.8 mol%), stabilized zirconia particles can be considered to be uniformly dispersed.

The powder composition of the present embodiment may be a powder composition containing two or more types of stabilized zirconias having contents of a stabilizing element that are different from each other, or may be a powder composition containing two types of stabilized zirconias having contents of a stabilizing element that are different from each other. Alternatively, the powder composition of the present embodiment may be a powder composition including two or more types of stabilized zirconia powders having contents of a stabilizing element that are different from each other, or may be a powder composition including two types of stabilized zirconia powders having contents of a stabilizing element that are different from each other. Alternatively, the powder composition of the present embodiment may be a powder composition of stabilized zirconia, the powder composition including a first stabilized zirconia and a second stabilized zirconia, or may be a powder composition of zirconia, the powder composition including a first stabilized zirconia powder and a second stabilized zirconia powder. Alternatively, the powder composition of the present embodiment may be a mixture of two or more types of stabilized zirconia powders having contents of a stabilizing element that are different from each other.

In order to finely adjust the stabilizing element content in the powder composition, the powder composition of the present embodiment may include three or more or four or more, or six or less or five or less stabilized zirconias (for example, particles) having contents of a stabilizing element that are different from each other. When the powder composition includes three or more stabilized zirconias, it is sufficient that the powder composition includes three or more stabilized zirconias having different contents of a stabilizing element, and the three stabilized zirconias preferably have contents of a stabilizing element that are different from each other.

The stabilizing element content of each stabilized zirconia included in the powder composition of the present embodiment is 8.0 mol% or less. For example, when the powder composition includes a first stabilized zirconia and a second stabilized zirconia, the stabilizing element content of each of the first stabilized zirconia and the second stabilized zirconia is 8.0 mol% or less. That is, the powder composition of the present embodiment does not include a stabilized zirconia having a stabilizing element content of more than 8.0 mol% (the stabilizing element contents of the first stabilized zirconia and the second stabilized zirconia are each 8.0 mol% or less). To provide a powder composition more suitable for short-time sintering, the powder composition of the present embodiment does not include a stabilized zirconia having a stabilizing element content of more than 8.0 mol%, and, preferably does not include a stabilized zirconia having a stabilizing element content of 8.0 mol% or more, or 7.5 mol% or more. A powder composition that includes a stabilized zirconia having a stabilizing element content of more than 8.0 mol% cannot provide a sintered body having translucency suitable for prosthetic anterior teeth through short-time sintering, even if the powder composition satisfies $\Delta V_{1300}$ (described later).

The powder composition of the present embodiment preferably includes a first stabilized zirconia having a stabilizing element content of 1.0 mol% or more and 5.0 mol% or less and a second stabilized zirconia having a stabilizing element content of 3.0 mol% or more and 8.0 mol% or less. The first stabilized zirconia and the second stabilized zirconia may be stabilized zirconia powders having different stabilizing element contents. Note that, in the powder composition of the present embodiment, a stabilized zirconia having a lower stabilizing element content is referred to as a "first stabilized zirconia" and a stabilized zirconia having a higher content of a stabilizing element is referred to as a "second stabilized zirconia". The terms "first" and "second" are expressions for differentiating two stabilized zirconias having different stabilizing element contents for convenience and do not mean the permutation or the like.

The first stabilized zirconia (stabilized zirconia having a lower content of the stabilizing element) preferably has a content of a stabilizing element of 1.0 mol% or more, 1.3 mol% or more, 1.5 mol% or more, 1.8 mol% or more, 2.0 mol% or more, or 2.3 mol% or more, and 5.0 mol% or less, 4.5 mol% or less, 4.2 mol% or less, 4.0 mol%, or 3.5 mol% or less.

The second stabilized zirconia (stabilized zirconia having a higher content of the stabilizing element) preferably has a content of a stabilizing element of 3.0 mol% or more, 3.5 mol% or more, 4.0 mol% or more, 4.5 mol% or more, or 5.0 mol% or more, and 8.0 mol% or less, 7.5 mol% or less, 7.0 mol% or less, 6.8 mol%, 6.5 mol% or less, or 6.3 mol% or less. When the powder composition includes a first stabilized zirconia having small $\Delta V$ in the first half of sintering and a second stabilized zirconia having large $\Delta V$ in the first half of sintering, the powder composition has $\Delta V$ in which a synergistic effect of the first stabilized zirconia and the second stabilized zirconia is exhibited. As a result, $\Delta V$ of the powder composition in the first half of sintering is easily reduced, although the stabilizing element content of the powder composition is high.

A decrease in the content of the stabilizing element of the first stabilized zirconia or an increase in the content of the first stabilized zirconia in the powder composition easily reduces $\Delta V$ in the first half of sintering of the powder composition.

To cause particles (powder particles) having different surface activities to coexist, the first stabilized zirconia and the second stabilized zirconia only need to have stabilizing element contents different from each other.

The difference in stabilizing element content (hereinafter also referred to as "difference in stabilizing element") between the first stabilized zirconia and the second stabilized zirconia is preferably 1.5 mol% or more, 2.0 mol% or more, 2.5 mol% or more, or 3.0 mol% or more, and 5.0 mol% or less, 4.5 mol% or less, 4.0 mol% or less, or 3.5 mol% or less.

A ratio of the first stabilized zirconia and the second stabilized zirconia contained in the powder composition of the present embodiment is not limited as long as the configurations described above are satisfied and may be, in terms of first stabilized zirconia: second stabilized zirconia, 1 mass%:99 mass% to 99 mass%:1 mass%, 20 mass%:80 mass% to 80 mass%:20 mass%, or 35 mass%:65 mass% to 65 mass%:35 mass%, 45 mass%:55 mass% to 55 mass%:45 mass%.

The first stabilized zirconia and the second stabilized zirconia may each be in the form of powder particles. That is, the powder composition may include first stabilized zirconia particles and second stabilized zirconia particles. The powder composition may include three or more types of stabilized zirconias (stabilized zirconia particles).

Since densification in short-time sintering is likely to be promoted, the BET specific surface area of the first stabilized zirconia is preferably equal to or larger than the BET specific surface area of the second stabilized zirconia, and the BET specific surface area of the first stabilized zirconia is preferably larger than the BET specific surface area of the second stabilized zirconia by 0 m$^2$/g or more, 1.5 m$^2$/g or more, or 2.0 m$^2$/g or more. It is not necessary to make the difference in BET specific surface area unnecessarily large, and, for example, the difference between the BET specific surface area of the first stabilized zirconia and the BET specific surface area of second stabilized zirconia may be 8.0 m$^2$/g or less, 6.0 m$^2$/g or less, or 3.5 m$^2$/g or less.

The BET specific surface area of the first stabilized zirconia may be, for example, 8 m$^2$/g or more, 10 m$^2$/g, 12 m$^2$/g or more, or 14 m$^2$/g, and 16 m$^2$/g or less or 15 m$^2$/g or less.

The stabilizing element content of the powder composition (that is, the content of a stabilizing element in the powder composition) of the present embodiment is more than 4.0 mol% and 5.8 mol% or less. If the stabilizing element content is 4.0 mol% or less, a sintered body satisfying translucency required for prosthetic anterior teeth cannot be obtained by short-time sintering. On the other hand, if the content of the stabilizing element exceeds 5.8 mol%, it is difficult to stably produce a sintered body satisfying translucency required for prosthetic anterior teeth through short-time sintering. The stabilizing element content of the powder composition of the present embodiment is preferably more than 4.0 mol%, 4.2 mol% or more, 4.4 mol% or more, 4.5 mol% or more, 4.7 mol% or more, 4.8 mol% or more, or 5.0 mol% or more, and preferably 5.8 mol% or less, 5.7 mol% or less, or 5.5 mol% or less. In the present embodiment, the stabilizing element content of the powder composition may be determined by ICP analysis.

Preferably, the powder composition of the present embodiment does not contain an undissolved stabilizing element. The phrase "not contain an undissolved stabilizing element" refers to a state in which, in the XRD measurement and the analysis of an XRD pattern described above, an XRD peak derived from a compound of a stabilizing element (for example, an oxide of a stabilizing element, such as yttria ($Y_2O_3$)) is not observed, and the powder composition of the present embodiment is allowed to contain an undissolved stabilizing element to the extent that the effects of the powder composition are not impaired.

The stabilizing element is preferably one or more selected from the group consisting of yttrium (Y), calcium (Ca), and magnesium (Mg). Yttrium, calcium, and magnesium function as the stabilizing element without coloring zirconia. The stabilizing element may include yttrium or may be yttrium alone.

A preferred yttrium content of the powder composition of the present embodiment may be more than 4.0 mol%, 4.2 mol% or more, 4.4 mol% or more, 4.5 mol% or more, 4.7 mol%, 4.8 mol% or more, or 5.0 mol% or more, and 5.8 mol% or less, 5.7 mol% or less, or 5.5 mol% or less.

In order to finely adjust ΔV, the powder composition of the present embodiment may contain, as an additional element, one or more selected from the group consisting of aluminum, germanium, silicon, and lanthanum, may contain one or more selected from the group consisting of aluminum, germanium, and silicon, may contain one or more selected from the group consisting of aluminum and germanium, and may contain aluminum. When an additional element is contained, the powder composition of the present embodiment may be regarded as a powder composition that contains an additional element and that includes, as a matrix, a zirconia containing a stabilizing element. The additional element may be contained as an oxide in the powder composition. Note that the powder composition of the present embodiment may not contain an additional element (that is, the content of the additional element may be the measurement limit value or less of compositional analysis).

The content of an additional element in terms of oxide (hereinafter also referred to as "additional element content" and the additional element content when the additional element is aluminum or the like is also referred to as "aluminum content" or the like) may be, for example, 0 mass% or more, more than 0 mass%, or 0.001 mass% or more, and less than 0.2 mass%, 0.1 mass% or less, less than 0.05 mass%, 0.03 mass% or less, 0.01 mass% or less, or 0.005 mass% or less.

For example, in a composition containing yttrium as a stabilizing element, containing aluminum as an additional element, and including zirconia as a matrix, the stabilizing element content (yttrium content) is a molar ratio [mol%] of yttrium in terms of $Y_2O_3$ relative to the total of zirconium in terms of $ZrO_2$ and yttrium in terms of $Y_2O_3$ and is determined from $\{Y_2O_3 \text{ [mol]}/(ZrO_2 + Y_2O_3) \text{ [mol]}\} \times 100$. The additional element content (aluminum content) in the composition is a mass ratio [mass%] of aluminum in terms of $Al_2O_3$ relative to the total of zirconium in terms of $ZrO_2$, yttrium in terms of $Y_2O_3$, and aluminum in terms of $Al_2O_3$ and is determined by the following formula.

$$\{Al_2O_3 \text{ [g]}/(ZrO_2 + Y_2O_3 + Al_2O_3) \text{ [g]}\} \times 100$$

The powder composition of the present embodiment may contain an element having the function of coloring zirconia (hereinafter also referred to as a "coloring element") as long as the effects thereof are not impaired. The coloring element may be an element that has the function of suppressing the phase transformation of zirconia or may be an element that does not have the function of suppressing the phase transformation of zirconia. A specific coloring element may be, for example, at least one of transition metal elements and lanthanide rare-earth elements, and at least one of transition metal elements other than zirconium and hafnium and lanthanide rare-earth elements other than lanthanum, and preferably one or more selected from the group consisting of iron (Fe), cobalt (Co), nickel (Ni), manganese (Mn), titanium (Ti), vanadium (V), praseodymium (Pr), neodymium (Nd), europium (Eu), gadolinium (Gd), terbium (Tb), erbium (Er) and ytterbium (Yb), one or more selected from the group consisting of iron, cobalt, manganese, titanium, praseodymium, neodymium, terbium and erbium, or one or more selected from the group consisting of iron, cobalt, titanium, terbium and erbium.

The powder composition of the present embodiment may contain incidental impurities such as hafnia ($HfO_2$). The content of hafnia contained as an incidental impurity may be, for example, 2.0 mass% or less, although it significantly varies depending on the raw material ore and the production method. In the present embodiment, the calculation of a value related to the composition, such as the calculation of a content or a density, may be performed by regarding hafnia as zirconia ($ZrO_2$).

In the powder composition of the present embodiment, the rate of change in thermal shrinkage rate per unit temperature at 1,300°C (hereinafter also referred to as "$\Delta V_{1300}$") is 0.07%°$C^{-1}$ or less and preferably less than 0.07%°$C^{-1}$, 0.065%°$C^{-1}$ or less, or 0.06%°$C^{-1}$ or less. When such $\Delta V_{1300}$ is satisfied in addition to the configurations described above, a sintered body having translucency suitable for prosthetic anterior teeth is obtained even in the case where the powder composition of the present embodiment is subjected to short-time sintering. Note that 1,300°C is in a temperature range in which thermal shrinkage of zirconia proceeds. Therefore, $\Delta V_{1300}$ is more than 0%°$C^{-1}$ and may be 0.02%°$C^{-1}$ or more, 0.04%°$C^{-1}$ or more, or 0.05%°$C^{-1}$ or more.

In the powder composition of the present embodiment, the rate of change in thermal shrinkage rate per unit temperature at 1,500°C (hereinafter also referred to as "$\Delta V_{1500}$") is preferably 0.02%°$C^{-1}$ or more or 0.03%°$C^{-1}$ or more. This allows densification in short-time sintering to be more likely to be promoted. $\Delta V_{1500}$ may be 0.05%°$C^{-1}$ or less or 0.04%°$C^{-1}$ or less. At $\Delta V_{1500}$ of 0.05%°$C^{-1}$ or less, a sintered body having high translucency is easily stably obtained when the powder composition is subjected to short-time sintering.

$\Delta V_{1300}$ and $\Delta V_{1500}$ are preferably different, that is, preferably, the rate of change in thermal shrinkage rate is not constant, which facilitates sinterability more suitable for short-time sintering. Furthermore, preferably, $\Delta V_{1300}$ is larger than $\Delta V_{1500}$ (the relationship of $\Delta V_{1300} > \Delta V_{1500}$ is satisfied), preferably, ($\Delta V_{1300}$ - $\Delta V_{1500}$) is 0.05%°$C^{-1}$ or less or 0.045%°$C^{-1}$ or less, and preferably, $\Delta V_{1300}$ - $\Delta V_{1500}$ is 0%°$C^{-1}$ or more, more than 0%°$C^{-1}$, 0.010°$C^{-1}$% or more, or 0.020°$C^{-1}$% or more.

$\Delta V_{1300}$ and $\Delta V_{1500}$ are indirectly influenced by, for example, the chemical composition of the powder composition. For example, a decrease (or an increase) in the stabilizing element content and a decrease (or an increase) in the additional element content cause $\Delta V_{1300}$ to tend to slow down (or tend to speed up). A decrease (or an increase) in the BET specific surface area of the first stabilized zirconia or a decrease (or an increase) in the stabilizing element content causes $\Delta V_{1300}$ to tend to slow down (or tend to speed up). A decrease (or an increase) in the BET specific surface area of the second stabilized zirconia causes $\Delta V_{1500}$ to tend to speed up (or tend to slow down). $\Delta V_{1300}$ and $\Delta V_{1500}$ may be controlled as appropriate by adjusting the foregoing.

The powder composition of the present embodiment preferably has a BET specific surface area of 8 $m^2$/g or more and 13 $m^2$/g or less. When the BET specific surface area falls within this range in the stabilizing element content of the powder composition of the present embodiment, $\Delta V_{1300}$ described above is easily satisfied. The BET specific surface area is preferably 8 $m^2$/g or more, 9 $m^2$/g or more, 9.5 $m^2$/g or more, or 10 $m^2$/g or more, and 13 $m^2$/g or less, 12 $m^2$/g or less, or 11 $m^2$/g or less.

The T + C phase fraction of the powder composition of the present embodiment is preferably 65% or more, 75% or more, 80% or more, or 90% or more. The T + C phase fraction may be 95% or less, or 93% or less.

The average particle size of the powder composition of the present embodiment is more preferably 0.35 $\mu$m or more or 0.40 $\mu$m or more, and 0.50 $\mu$m or less or 0.45 $\mu$m or less.

To improve fluidity, the powder composition of the present embodiment may be in the form of a granular powder. The average granule size of the granular powder may be, for example, 30 $\mu$m or more, 40 $\mu$m or more, or 50 $\mu$m or more, and 80 $\mu$m or less, or 60 $\mu$m or less. The bulk density of the granular powder may be 1.00 $g/cm^3$ or more or 1.10 $g/cm^3$ or more, and 1.40 $g/cm^3$ or less or 1.30 $g/cm^3$ or less.

A method for producing a powder composition of the present embodiment will be described.

The production method is not limited as long as the powder composition of the present embodiment has the features described above. A preferred method for producing a powder composition of the present embodiment may be a method for producing a powder composition, the method including a step of mixing two or more stabilized zirconia powders having different contents of a stabilizing element.

The stabilized zirconia powders provided for the step of mixing two or more stabilized zirconia powders having contents of a stabilizing element that are different from each other (hereinafter also referred to as "mixing step") may be, for example, a powder of the first stabilized zirconia described above and a powder of the second stabilized zirconia described above.

The stabilized zirconia powders each preferably have a BET specific surface area similar to that of the powder composition of the present embodiment. In addition to this, the BET specific surface areas of the stabilized zirconia powders are more preferably different from each other. The BET specific surface area of the powder of the first stabilized zirconia is still more preferably equal to or larger than the BET specific surface area of the powder of the second stabilized zirconia. Specifically, the BET specific surface area of the powder of the first stabilized zirconia is larger than the BET specific surface area of the powder of the second stabilized zirconia by, for example, 0 $m^2$/g or more, preferably 1.5 $m^2$/g or more, more preferably 2.0 $m^2$/g or more. The difference between the BET specific surface area of the powder of the first stabilized zirconia and the BET specific surface area of the powder of the second stabilized zirconia may be 6.0 $m^2$/g or less, or 5.0 $m^2$/g or less.

When the stabilized zirconia powders used as starting materials in the method for producing a powder composition have known stabilizing element contents, the stabilizing element content of each of the stabilized zirconias included in the powder composition may be calculated from the stabilizing element contents and the mixing ratio of the stabilized zirconia powders instead of the STEM-EDS measurement described above.

The difference between the maximum value and the minimum values of the stabilizing element content determined by the STEM-EDS measurement (distribution width, method I) tends to be larger than the difference in stabilizing element content between the stabilized zirconia powders (method II). This is because the difference in method I is determined in terms of the maximum value and the minimum value in a mixture of the powders, whereas the difference in method II is determined as the difference between average values of the stabilizing element contents of the powders. If at least one of the difference determined by method I and the difference determined by method II is 2.0 mol% or more, it can be determined that two or more types of stabilized zirconias having stabilizing element contents different from each other are included. At least one of the difference determined by method I and the difference determined by method II may be 2.5 mol% or more, more than 2.5 mol%, or 3.0 mol% or more. This enables the light transmittance and biaxial flexural strength of the resulting sintered body to be sufficiently high. At least one of the difference determined by method I and the difference determined by method II may be 6.0 mol% or less, 5.0 mol% or less, or 4.0 mol% or less. At least one of the difference determined by method I and the difference determined by method II may be 2.0 mol% to 6.0 mol%. The upper limit and/or the lower limit of the ranges of numerical values may be replaced by the numerical values mentioned above.

The method for producing a stabilized zirconia powder provided for the mixing step may be any method. An example of the producing method may be a method for producing a zirconia powder, the method including a powder calcination step of heat-treating a composition including a zirconia sol and a stabilizing element source (hereinafter also referred to as a "sol composition") to prepare a calcined powder, and a powder grinding step of grinding the calcined powder.

The zirconia sol is a sol in which zirconium dioxide is hydrated and crosslinked, preferably a zirconia sol obtained by at least one of a hydrothermal synthesis method and a hydrolysis method, more preferably a zirconia sol obtained by a hydrolysis method.

The stabilizing element source (hereinafter, when the stabilizing element is yttrium or the like, it is also referred to as an "yttrium source" or the like) may be a compound including a stabilizing element, for example, one or more selected from the group consisting of an oxide, a hydroxide, an oxyhydroxide, a halide, a sulfate, a nitrate, and an acetate of a stabilizing element, and is preferably at least one of an oxide, a hydroxide, an oxyhydroxide, and a chloride of a stabilizing element, more preferably at least one of an oxide, a hydroxide, and a chloride of a stabilizing element. For example, the yttrium source may be one or more selected from the group consisting of yttrium oxide (yttria), yttrium hydroxide, and yttrium chloride and is preferably at least one of yttrium oxide and yttrium chloride.

The content of the stabilizing element source may be the same as the stabilizing element content in the target stabilized zirconia and may be, for example, an amount equivalent to the stabilizing element content described above.

The sol composition includes at least a zirconia sol and a stabilizing element source and may be, for example, an aqueous solution containing a zirconia sol and a stabilizing element source.

In the powder calcination step, the sol composition is subjected to heat treatment. This provides a calcined powder, which is a precursor of a stabilized zirconia powder.

In the heat treatment in the powder calcination step, heat-treatment conditions may be appropriately set in accordance with the amount of sol composition provided for the powder calcination step, the BET specific surface area of the target calcined powder, and properties of a sintering furnace provided for calcination. For example, as the heat-treatment temperature increases (or decreases), the BET specific surface area tends to decrease (or tends to increase). The heat-treatment temperature may be, for example, 950°C or higher, 1,000°C or higher, 1,020°C or higher, or 1,100°C or higher, and 1,250°C or lower, 1,200°C or lower, 1,180°C or lower, or 1,150°C or lower. The holding time at the heat-treatment temperature may be, for example, one hour or more and eight hours or less, or two hours or more and six hours or less. However, the holding time less affects the BET specific surface area of the calcined powder than the heat-treatment temperature. The heat treatment may be performed using a typical sintering furnace.

The atmosphere of the heat treatment is not limited, may be, for example, one or more selected from the group consisting of an oxidizing atmosphere, a reducing atmosphere, an inert atmosphere, and a vacuum atmosphere and is preferably an oxidizing atmosphere, more preferably an air atmosphere.

In the powder grinding step, the grinding method may be any method as long as a powder having a desired particle size is obtained. The grinding method may be at least one of wet grinding and dry grinding and is preferably wet grinding. An example of a preferred grinding method is a ball mill grinding. Grinding conditions may be appropriately set in accordance with the grinding method and the desired particle size. For example, an increase in the grinding time tends to decrease the particle size.

In the production method of the present embodiment, the mixing step includes mixing two or more stabilized zirconia powders having different contents of the stabilizing element. The mixing method may be any method of uniformly mixing stabilized zirconia powders and is, for example, at least one of dry mixing and wet mixing, preferably wet mixing, more preferably mixing in an aqueous solution.

A preferred mixing method is a method including preparing slurries each containing a stabilized zirconia powder, and mixing the slurries because the stabilized zirconia powders are easily uniformly mixed.

Another method may be a method including adding a slurry containing a stabilized zirconia powder having a large BET specific surface area to a slurry containing a stabilized zirconia powder having a small BET specific surface area, and mixing the slurries. With this mixing method, slurries containing a stabilized zirconia powder are easily uniformly mixed, and $\Delta V$ more suitable for short-time sintering is likely to be satisfied.

The mixing may be performed at a stirring power of 0.005 $kW/m^3$ or more or 0.01 $kW/m^3$ or more, and is performed preferably at 0.1 $kW/m^3$ or more or 0.3 $kW/m^3$ or more. Mixing at such a stirring power easily reduces variations in properties when a powder composition of the present embodiment is repeatedly produced. As a result, a sintered body obtained by short-time sintering of the powder composition is likely to have a high Weibull coefficient. It is not necessary to make the stirring power unnecessarily high, and the stirring power may be, for example, 1.0 $kW/m^3$ or less or 0.7 $kW/m^3$ or less.

The mixing time may be appropriately set in accordance with the amounts of powders provided for the mixing step and may be, for example, 0.5 hours or more and 12 hours or less.

The mixing ratio of the stabilized zirconia powders may be appropriately adjusted in accordance with the stabilizing element contents of the stabilized zirconias and the target powder composition, and may be, for example, in terms of powder of first stabilized zirconia:powder of second stabilized zirconia, 1 mass%:99 mass% to 99 mass%:1 mass%, 20 mass%:80 mass% to 80 mass%:20 mass%, or 35 mass%:65 mass% to 65 mass%:35 mass%, 45 mass%:55 mass% to 55 mass%:45 mass%.

In order to finely adjust the stabilizing element content of the powder composition, three types or more or four types or more, and six types or less or five types or less of stabilized zirconias having different stabilizing element contents may be mixed in the mixing step.

In the mixing step, an additional element source may be further mixed. This provides a powder composition containing an additional element. The additional element source (hereinafter, when the additional element is aluminum or the like, it is also referred to as an "aluminum source" or the like) is at least one of an additional element and compounds thereof and is preferably at least one of an oxide of an additional element and a precursor thereof, more preferably an oxide of an additional element. For example, the aluminum source may be at least one of alumina and a precursor thereof and is preferably alumina, more preferably $\alpha$-alumina.

The amount of additional element source mixed may be the same as the additional element content in the target powder composition and may be, for example, an amount equivalent to the additional element content described above.

In the mixing step, a coloring element source may be further mixed. The coloring element source is a compound including a coloring element and is preferably at least one of an oxide of a coloring element and a precursor thereof, more preferably an oxide of a coloring element. The amount of coloring element source may be such an amount that a desired color tone of the sintered body is provided.

In the mixing step, a stabilized zirconia containing at least one of an additional element and a coloring element may be provided in addition to the mixing of at least one of the additional element source and the coloring element source (hereinafter also referred to as "additional element source, etc.") or instead of the addition of the additional element source, etc.

The production method of the present embodiment may include, after the mixing step, a granulation step of granulating the powder composition. The granulation may be any method as long as a zirconia powder becomes loosely aggregated, and an example thereof may be a granulation method such as spray granulation.

In the granulation step, the powder composition of the present embodiment and a binder may be mixed and then granulated. When a binder is included, a green body obtained by molding the resulting granular powder has high shape retainability. The binder included in the granular powder may be a publicly known binder used in molding of ceramics and is preferably an organic binder. The organic binder is one or more selected from the group consisting of polyvinyl alcohol, polyvinyl butyrate, wax and an acrylic resin, preferably one or more of polyvinyl alcohol and an acrylic resin, more preferably an acrylic resin. In the present embodiment, an acrylic resin is a polymer including at least one of an acrylate and a methacrylate. A specific acrylic resin may be, for example, one or more selected from the group consisting of polyacrylic acid, polymethacrylic acid, acrylic acid copolymers and methacrylic acid copolymers, and derivatives thereof.

Next, a calcined body of the present disclosure will be described with reference to an exemplary embodiment.

A calcined body of the present embodiment includes two or more stabilized zirconias having contents of a stabilizing element that are different from each other, in which a content of the stabilizing element in the calcined body is more than 4.0 mol% and 5.8 mol% or less, a rate of change in thermal shrinkage rate per unit temperature at 1,300°C is 0.07%°C$^{-1}$ or less, and the contents of the stabilizing element of the two or more stabilized zirconias are each 8.0 mol% or less. The calcined body may be a calcined body of stabilized zirconias. From the viewpoint of sufficiently increasing the light transmittance of the sintered bodies, the total proportion of the two or more stabilized zirconias in the calcined body may be 90 mass% or more, may be 95 mass% or more, or may be 98 mass% or more, and may be 100 mass% or less or less than 100 mass%. The calcined body of the present embodiment can provide a sintered body satisfying translucency required for prosthetic anterior teeth even through short-time sintering.

The calcined body of the present embodiment may include a first stabilized zirconia and a second stabilized zirconia each having a content of the stabilizing element of 8.0 mol% or less. The first stabilized zirconia and the second stabilized zirconia have contents of the stabilizing element different from each other. For example, the contents of the stabilizing element of the first stabilized zirconia and the second stabilized zirconia may each be 8.0 mol% or less. The content of the stabilizing element in the calcined body may be more than 4.0 mol% and 5.8 mol% or less. In the calcined body, the rate of change in thermal shrinkage rate per unit temperature at 1,300°C may be 0.02%°C$^{-1}$ or more.

The calcined body of the present embodiment includes two or more stabilized zirconias having different contents of the stabilizing element. The fact that the calcined body of the present embodiment includes two or more stabilized zirconias having different contents of the stabilizing element can be determined by STEM-EDS using the same method as that used for the powder composition of the present embodiment except that a powder prepared by dry-grinding a calcined body so as to have an average particle size of 0.40 µm or more and 0.50 µm or less is used. A calcined body satisfying at least one of conditions that the distribution width of the stabilizing element content is ± 1.5 mol% or more and that the distribution profile of the stabilizing element content is multimodal (for example, bimodal) includes two or more stabilized zirconias having different stabilizing element contents. In the calcined body of the present embodiment, the distribution profile in the distribution of the stabilizing element content is preferably bimodal.

The BET specific surface area of the calcined body of the present embodiment is preferably 5 m$^2$/g or more or 6 m$^2$/g or more, and 8 m$^2$/g or less or 7 m$^2$/g or less.

The T + C phase fraction of the calcined body of the present embodiment is preferably 75% or more, 80% or more, 90% or more, 95% or more, or 98% or more, and 100% or less or 99% or less.

The calcined body density of the calcined body of the present embodiment may be 2.95 g/cm$^3$ or more or 3.00 g/cm$^3$ or more, and 3.50 g/cm$^3$ or less, 3.30 g/cm$^3$ or less, or 3.15 g/cm$^3$ or less.

The Vickers hardness of the calcined body of the present embodiment is preferably 35 kgf/mm$^2$ or more or 40 kgf/mm$^2$ or more, and 100 kgf/mm$^2$ or less, 80 kgf/mm$^2$ or less, 70 kgf/mm$^2$ or less, 55 kgf/mm$^2$ or less, 50 kgf/mm$^2$ or less, or 47 kgf/mm$^2$ or less because defects in shape processing such as CAM processing are unlikely to be generated.

The features of the calcined body of the present embodiment may be the same as those of the powder composition of the present embodiment except that the calcined body is formed of fused particles and except for the above-described points.

Next, a method for producing a calcined body of the present embodiment will be described.

The method for producing a calcined body of the present embodiment may be any method and may be, for example, a method for producing a calcined body, the method including a step of calcining a green body including a powder composition of the present embodiment.

The green body provided for the step of calcining a green body including a powder composition of the present embodiment (hereinafter also referred to as a "calcination step") is preferably a green body in a state in which the powder composition of the present embodiment is molded.

The shape of the green body may be at least one selected from the group consisting of a cubic shape, a rectangular parallelepiped shape, a polyhedral shape, a columnar shape, a cylindrical shape, a disk shape, and an approximately spherical shape. In consideration of thermal shrinkage due to sintering, the green body may have a shape similar to the shape of a desired calcined body or sintered body, for example, a dental prosthetic material shape.

The green body density may be 2.80 g/cm$^3$ or more, 2.95 g/cm$^3$ or more, or 3.00 g/cm$^3$ or more, and 3.50 g/cm$^3$ or less, 3.40 g/cm$^3$ or less, 3.30 g/cm$^3$ or less, 3.20 g/cm$^3$ or less, or 3.15 g/cm$^3$ or less.

In the present embodiment, the green body may be produced by any method, and a publicly known method for molding ceramics can be applied. The molding method may be, for example, one or more selected from the group consisting of uniaxial pressing, cold isostatic pressing, slip casting, and injection molding. For convenience, the molding method is preferably a method other than at least slip casting, preferably at least one of uniaxial pressing and cold isostatic pressing, and more preferably uniaxial pressing followed by cold isostatic pressing. The pressure of uniaxial pressing may be, for example, 15 MPa or more and 150 MPa or less, and the pressure of cold isostatic pressing may be, for example, 90 MPa or more and 400 MPa or less. The higher the pressure in molding, the higher the green body density tends to be.

When the green body includes a binder, prior to calcination, a step of removing the binder, a so-called debinding step may be included. The binder may be removed by any method, and the method may be, for example, heat treatment in an air atmosphere at 400°C or higher and lower than 900°C.

The calcination may be heat treatment at a temperature at which zirconia has not been sintered. Calcination conditions are, for example, the following conditions.

| | |
|---|---|
| Calcination atmosphere : | Oxidizing atmosphere, preferably air atmosphere |
| Calcination temperature : | 950°C or higher or 1,000°C or higher, and 1,150°C or lower or 1,100°C or lower |
| Calcination time : | 0.5 hours or more or 1 hour or more, and 5 hours or less or 3 hours or less |

Next, a method for producing a sintered body, the method using at least one of the powder composition and the calcined body of the present embodiment (hereinafter also referred to as "powder composition, etc. of the present embodiment"), will be described.

The powder composition of the present embodiment enables the production of a calcined body suitable for a precursor of prosthetic anterior teeth through calcination thereof. The powder composition, etc. of the present embodiment enable the production of a sintered body suitable for prosthetic anterior teeth through sintering thereof. In particular, the powder composition, etc. of the present embodiment enable the production of a sintered body having aesthetic quality based on translucency equivalent to that of a sintered body obtained by an existing sintering method (for example, normal sintering) even in the case where the sintering is short-time sintering.

In the method for producing a sintered body, the method using the powder composition, etc. of the present embodiment, a sintered body is obtained by sintering the powder composition, etc. of the present embodiment by any sintering method. A sintering method that is publicly known as a method for sintering ceramics, for example, one or more selected from the group consisting of pressureless sintering, pressure sintering, and vacuum sintering are applicable to sintering in the sintering step. The sintering method is preferably pressureless sintering, more preferably pressureless sintering alone, specifically, a sintering method that does not use pressure sintering or vacuum sintering because pressureless sintering is widely applied to the production of dental prosthetic materials. When the sintering method is pressureless sintering alone, a sintered body is obtained, as a so-called pressureless sintered body, from the powder composition, etc. of the present embodiment.

A particularly preferred sintering method is pressureless sintering in an air atmosphere, and the sintering time is seven hours or less, preferably five hours or less, more preferably three hours or less, still more preferably one hour or less. Furthermore, sintering during which the temperature is increased to a sintering temperature at different rates of temperature increase (for example, sintering during which the temperature is increased at two-step temperature-increasing rate) is preferred.

Preferred sintering conditions are, for example, the following conditions.

Sintering method: Pressureless sintering
Sintering atmosphere: Oxidizing atmosphere, preferably air atmosphere
Sintering temperature: 1,450°C or higher, 1,500°C or higher, or 1,550°C or higher, and 1,650°C or lower, 1,620°C or lower, or 1,600°C or lower
Sintering time: 3 minutes or more, 5 minutes or more, 7 minutes or more, or 8 minutes or more, and 30 minutes or less, 20 minutes or less, or 15 minutes or less

Rate of temperature increase:

(from room temperature to 1,050°C)
150 °C/min or more, 200 °C/min or more, or 250 °C/min or more, and 350 °C/min or less or 300 °C/min or less
(from 1,050°C to sintering temperature)
30 °C/min or more, 40 °C/min or more, or 50 °C/min or more, and 150 °C/min or less, 70 °C/min or less, or 60 °C/min or less

Rate of temperature decrease:
(from sintering temperature to 900°C)
30 °C/min or more, 40 °C/min or more, or 60 °C/min or more, and 300 °C/min or less, 100 °C/min or less, or 65 °C/min or less

In the case where a powder composition is sintered, prior to sintering, the powder composition may be formed into a green body by any method. In the case where a calcined body is sintered, prior to sintering, the calcined body provided for sintering may be processed into any shape. The calcined body can be formed into any shape through processing such as CAD/CAM, and a sintered body having any shape is thereby easily obtained.

Next, as one example of a sintered body obtained by sintering the powder composition, etc. of the present embodiment, a sintered body obtained by subjecting the powder composition, etc. of the present embodiment to short-time sintering (hereinafter also referred to as a "sintered body of the present embodiment") will be described below.

The sintered body of the present embodiment includes, as a matrix, a stabilized zirconia containing a stabilizing element, in which a content of the stabilizing element is more than 4.0 mol% and 5.8 mol% or less, an average crystal grain size is 2.5 $\mu$m or less, and a tetragonal prime phase fraction is 70% or more. The sintered body may have a content of the stabilizing element of more than 4.0 mol% and 5.8 mol% or less, a difference in crystal grain size of 0.10 $\mu$m or less, and a tetragonal prime phase fraction of 70% or more. The sintered body may be a zirconia sintered body including zirconia as a matrix (sintered body of zirconia).

The stabilizing element is preferably one or more selected from the group consisting of yttrium, calcium, and magnesium, more preferably yttrium.

In the sintered body of the present embodiment, the stabilizing element is dissolved in zirconia, and, more preferably, the sintered body of the present embodiment does not contain an undissolved stabilizing element.

The stabilizing element content in the sintered body or the matrix is more than 4.0 mol% and 5.8 mol% or less and is preferably more than 4.0 mol%, 4.2 mol% or more, 4.4 mol% or more, 4.5 mol% or more, 4.7 mol% or more, 4.8 mol% or more, or 5.0 mol% or more, and 5.8 mol% or less, 5.7 mol% or less, or 5.5 mol% or less.

In the present embodiment, the stabilizing element contents in the sintered body and the matrix may be determined by ICP analysis.

The average crystal grain size of the sintered body of the present embodiment is preferably 2.5 $\mu$m or less, 2.0 $\mu$m or less, 1.8 $\mu$m or less, 1.5 $\mu$m or less, 1.3 $\mu$m or less, or less than 1.3 $\mu$m. The average crystal grain size may be 0.7 $\mu$m or more, 0.8 $\mu$m or more, 1.0 $\mu$m or more, or 1.2 $\mu$m or more.

The difference in crystal grain size of the sintered body of the present embodiment is 0.10 $\mu$m or less and is preferably less than 0.10 $\mu$m, 0.09 $\mu$m or less, 0.07 $\mu$m or less, 0.05 $\mu$m or less, or 0.04 $\mu$m or less. The difference in crystal grain size may be 0 $\mu$m or more or 0.005 $\mu$m or more. Such a crystal grain size is considered to indicate a state of crystal grains obtained by subjecting the powder composition, etc. of the present embodiment to short-time sintering.

The term "difference in crystal grain size" refers to an index indicating a state of crystal grains constituting a sintered body, and specifically refer to an index indicating the difference between crystal grains constituting a surface of a sintered body and crystal grains constituting an inside of the sintered body.

The difference in crystal grain size can be determined by image analysis of a SEM observation image of a section obtained by cutting a sintered body in the thickness direction. Specifically, first, the entire thickness of the sintered body is defined as 100% and SEM observation is performed in any region extending from a surface to 1% (surface portion) in the thickness direction. A SEM observation image obtained in this manner is subjected to image analysis to determine the average value of the equivalent circle diameter of crystal grains constituting the surface portion of the sintered body (hereinafter referred to as a "surface grain size"). Furthermore, SEM observation is performed in any region extending between 40% and 60% from the surface in the thickness direction of the sintered body. A SEM observation image obtained in this manner is subjected to image analysis to determine the average value of the equivalent circle diameter of crystal grains constituting the inside of the sintered body (hereinafter referred to as an "internal grain size") by a method similar to that used for the surface grain size. The measured number of crystal grains included in the surface portion of the sintered body and the measured number of crystal grains included in the inside of the sintered body are each 450 $\pm$ 50. The equivalent circle diameters may be measured using a plurality of SEM observation images as needed. The absolute value of the difference between the surface grain size and the internal grain size determined in this manner is the difference in crystal grain size.

The surface grain size and the internal grain size are determined by analysis with image analysis software (for example, Mac-View Ver. 5, manufactured by MOUNTECH Co., Ltd.). The absolute value of the difference between the surface grain size and the internal grain size is determined, and this may be defined as the difference in crystal grain size.

The T' phase fraction of the sintered body of the present embodiment is preferably 70% or more, 80% or more, or 90% or more. The T' phase fraction may be 100% or less or 99% or less.

The light transmittance of the sintered body of the present embodiment is preferably more than 45%, 46% or more, or 47% or more. The light transmittance satisfying this value enables applications to, for example, dental prosthetic materials such as prosthetic anterior teeth, in particular, dental prosthetic materials that require high translucency. The light transmittance in the range of the stabilizing element content of the sintered body of the present embodiment may be, for example, 52% or less, 51% or less, or 50% or less.

The C phase fraction of the sintered body of the present embodiment is preferably less than 30%, 10% or less, 5% or less, 1% or less, or 0.5% or less. The sintered body of the present embodiment may not contain the C phase (the C phase fraction may be 0%), and the C phase fraction of the sintered body of the present embodiment may be 0% or more.

The biaxial flexural strength of the sintered body of the present embodiment is preferably 650 MPa or more, 700 MPa or more, 720 MPa or more, 740 MPa, 770 MPa, 790 MPa, or 800 MPa or more. When such a biaxial flexural strength is satisfied, the sintered body of the present embodiment is also applicable to dental prostheses having smaller shapes. The higher the biaxial flexural strength, the better. When the stabilizing element content of the present embodiment is satisfied, the biaxial flexural strength may be, for example, 1,000 MPa or less, 900 MPa or less, 850 MPa or less, or 800 MPa or less.

The Weibull coefficient of the sintered body of the present embodiment may be, for example, 4.0 or more, 5.0 or more, or 6.0 or more. The higher the Weibull coefficient, the better. However, when the stabilizing element content of the present embodiment is satisfied, the Weibull coefficient may be, for example, 15.0 or less or 12.0 or less.

Some embodiments of the present disclosure have been described above; however, the present disclosure is not limited to the above-described embodiments at all. For example, numerical ranges that are any combinations of the upper and lower limit values specifically described in each of the embodiments are also included in the present disclosure. In addition, upper limit values and/or lower limit values replaced with the values of Examples described below are also included in the present disclosure.

**Examples**

Hereinafter, the contents of the present disclosure will be described in detail with reference to Examples and Comparative Examples. However, the present disclosure is not limited to Examples.

(Crystalline phase, tetragonal phase + cubic phase fraction, tetragonal prime phase fraction, and cubic phase fraction)

The crystalline phases were identified by XRD measurement under the following conditions using an X-ray diffractometer (device name: Ultima IV, manufactured by Rigaku Corporation).

| | |
|---|---|
| Radiation source : | $CuK\alpha$ radiation ($\lambda$ = 0.15418 nm) |
| Measurement mode : | Continuous scanning |
| Scanning speed : | 2 °/min |
| Measurement range : | $2\theta$ = 26° to 33° |
| | $2\theta$ = 72° to 76° |
| Accelerating voltage-electric current : | 40 mA-40 kV |
| Divergence height limiting slit: | 10 mm |
| Divergence/incident slit : | 1° |
| Light-receiving slit : | Open |
| Detector : | Semiconductor detector (D/teX Ultra) |
| Filter : | Ni filter |
| Goniometer radius : | 185 mm |

The crystalline phases were identified by, using an analysis program attached to the X-ray diffractometer (program name: Integrated X-ray powder diffraction software PDXL Ver. 2.2, manufactured by Rigaku Corporation), performing smoothing treatment and background subtraction treatment and subjecting an XRD pattern after the treatment to profile-fitting using a split pseudo-Voigt function.

The tetragonal phase + cubic phase fraction, the cubic phase fraction, and the tetragonal prime phase fraction were determined from XRD patterns of surfaces of a powder composition, a calcined body, and a sintered body of the present embodiment by the formula (2), the formula (4), and the formula (3).

(Compositional analysis)

The chemical composition of a composition was measured by ICP analysis.

(Stabilizing element content: $Y_2O_3$ [mol%])

The stabilizing element content (mol% of yttrium in terms of oxide) was determined by STEM-EDS measurement of a powder composition or a calcined body using the method described above. The STEM-EDS measurement was performed under the following conditions using a transmission electron microscope (device name: JEM-2100F, manufactured by JEOL Ltd.) and an energy dispersive X-ray spectrometer (device name: JED-2300T, manufactured by JEOL Ltd.). A plurality of STEM observation images were used such that the number of powder particles to be measured was 20 $\pm$ 10.

| Accelerating voltage : | 200 kV |
| Observation magnification : | 400,000 times |

As pretreatment of the STEM-EDS measurement, a powder composition was disintegrated in a mortar. Subsequently, loose aggregation of the powder was removed by ultrasonic treatment, and the powder was dispersed in acetone to prepare a slurry. The slurry was dried on a collodion membrane to prepare a sample for measurement. In the case of a calcined body, a sample for measurement was prepared by the same method as that in a powder composition except that the calcined body was dry-ground in a mortar.

(BET specific surface area)

The BET specific surface area was measured using an automatic specific surface area measuring device (device name: TriStar II 320, manufactured by Shimadzu Corporation) in accordance with JIS R 1626 by a multi-point BET method (five points) under the following conditions.

| Adsorption medium : | $N_2$ |
| Adsorption temperature : | -196°C |
| Pretreatment condition : | Degassing treatment in an air atmosphere at 250°C for one hour or more |

(Average particle size)

The average particle size was determined by measuring a particle size distribution by a laser diffraction/scattering method using a Microtrac particle size distribution analyzer (apparatus name: MT3300EXII, manufactured by MicrotracBEL Corp.). Measurement conditions are described below.

| Light source : | Semiconductor laser (wavelength: 780 nm) |
| Voltage : | 3 mW |
| Measurement sample : | Ground slurry |
| Refractive index of zirconia : | 2.17 |
| Refractive index of solvent (water) : | 1.333 |
| Calculation mode : | HRA |

As pretreatment, a sample powder was suspended in distilled water to prepare a slurry, and the slurry was then subjected to dispersion treatment for three minutes with an ultrasonic homogenizer (device name: US-150T, manufactured by NIHONSEIKI KAISHALTD.)

(Rate of change in thermal shrinkage rate: ΔV)

ΔV ($\Delta V_{1300}$ and $\Delta V_{1500}$) of a powder composition and a calcined body were determined by the above-described method using a thermal dilatometer (device name: TD5000SE, manufactured by NETZSCH) and alumina serving as a standard sample. Analysis software for thermal analysis (software name: analysis software for TD5000SE, Ver. 5.0.2, manufactured by NETZSCH) was used to correct thermal expansion of the standard sample.

ΔV of a powder composition and a calcined body were measured by the following procedure: For ΔV of a powder composition, a die was filled with the powder composition, and the powder composition was uniaxially compacted at a pressure of 19.6 MPa and then subjected to CIP treatment at a pressure of 196 MPa to prepare a cylindrical green body A with a diameter of 6 mm and a length of 15 ± 2 mm. The green body A was treated in an air atmosphere at 700°C for one hour and used as a measurement sample for measuring ΔV of the powder composition. For ΔV of a calcined body, the green body A was calcined at 1,000°C for one hour and used as a measurement sample for measuring ΔV of the calcined body. The measurement conditions are described below.

| Atmosphere : | Under air circulation (100 mL/min) |
| Rate of temperature increase : | 20 °C/min |
| Maximum temperature reached : | 1,600°C |

$T_0$ was set to 30°C, and the length (l) of the green body was measured every 3 seconds from the start of the temperature increase. The thermal shrinkage rate L(T) at each temperature T including T1 and T2 was determined by the formula (1) above. In the measurement of $\Delta V_{1300}$, T1 was 1,300°C and T2 was 1,303°C. In the measurement of $\Delta V_{1500}$, T1 was 1,500°C and T2 was 1,503°C. The difference between $\Delta V_{1300}$ and $\Delta V_{1500}$ is shown in Tables 2 and 3.

(Green body density)

The mass of a green body sample was measured with a balance, and the volume was determined from dimensions measured with a vernier caliper. The green body density was determined from the mass and the volume.

(Calcined body density)

The mass of a calcined body sample was measured with a balance, and the volume was determined from dimensions measured with a vernier caliper. The calcined body density was determined from the mass and the volume.

(Vickers hardness)

The Vickers hardness was determined by, using a Vickers tester (device name: Q30A, manufactured by Qness), statically pressing an indenter onto a surface of a measurement sample, and measuring the diagonal length of an indentation mark formed on the surface of the measurement sample under the following conditions. The Vickers hardness was determined from the formula (5) using the diagonal length.

Measurement sample : A disk shape with a thickness of 3.0 ± 0.5 mm
Measurement load : 1 kgf

The measurement sample used was a calcined body having a measurement surface that was polished by 0.1 mm with #800 waterproof abrasive paper prior to the measurement.

(Average crystal grain size and difference in crystal grain size)

The average crystal grain size and the difference in crystal grain size (= (surface grain size - internal grain size|) were determined by the above-described methods using a SEM (device name: JSM-IT500LA, manufactured by JEOL Ltd.) and image analysis software (software name: Mac-View Ver. 5, manufactured by MOUNTECH Co., Ltd.).
Conditions for the SEM observation are as follows. The average crystal grain size, the surface grain size, and the internal grain size were each determined by measuring 450 ± 50 crystal grains. A plurality of SEM observation images were used for each measurement.

Accelerating voltage : 15 kV
Observation magnification : 5,000 times

Prior to the measurement, a measurement sample was prepared by polishing a section of a sintered body so as to have a surface roughness Ra of 0.02 μm or less, and then subjecting the section to thermal etching at a temperature 100°C lower than the sintering temperature for 30 minutes.
For the SEM observation images captured in the image analysis software, grain boundaries of crystal grains were traced on the software to extract crystal grains without discontinuous crystal grain boundaries. After the extraction, the areas and the equivalent circle diameters of the crystal grains were determined with the image analysis software to determine the average crystal grain size, the surface grain size, and the internal grain size. The absolute value of the difference between the surface grain size and the internal grain size was determined and used as the difference in crystal grain size. These values were determined by processing with the image analysis software. For the average crystal grain size and the surface grain size, SEM observation images obtained by observing a region extending from the surface of the sintered body to 20 μm (region extending from the surface of the sintered body to 1% in the thickness direction) were used. For the internal grain size, SEM observation images obtained by observing a region extending from the surface of the sintered body to 800 μm (region extending from the surface of the sintered body to 40% in the thickness direction) were used.

(Light transmittance)

The light transmittance (total light transmittance) was measured by a method according to JIS K 7361-1 with a haze meter (device name: NDH4000, manufactured by Nippon Denshoku Industries Co., Ltd.) using a D65 light source. The measurement sample used was a disk-shaped sintered body with a thickness of 1 mm, both surfaces of which were polished so as to have a surface roughness Ra of 0.02 $\mu$m or less.

(Light transmittance ratio)

A ratio of the light transmittance [%] of a short-time sintered boy (described later) to the light transmittance [%] of a normal sintered boy (described later) was determined as a light transmittance ratio.

(Biaxial flexural strength)

The biaxial flexural strength was measured by a method according to JIS T 6526. The measurement was performed 10 times, and the average value was determined. The measurement was performed using a circular sintered body sample with a diameter of 14.5 mm $\pm$ 0.5 and a thickness of 1.25 mm $\pm$ 0.05 mm under the conditions of a support circle radius of 6 mm and an indenter radius of 0.7 mm. The cross-head speed was 0.5 mm/min.

(Weibull coefficient)

The Weibull coefficient was calculated by a method according to JIS R 1625. The measurement of the biaxial flexural strength was performed 15 times under the conditions of a support circle radius of 6 mm and an indenter radius of 0.7 mm using, as a measurement sample, a circular sintered body with a diameter of 14.5 mm $\pm$ 0.5 and a thickness of 1.25 mm $\pm$ 0.05 mm. The Weibull coefficient was determined by the above-described calculation method using the measured values.

<Production of powder composition>

[Example 1]

Yttria ($Y_2O_3$) was mixed with a hydrated zirconia sol prepared by hydrolyzing an aqueous solution of zirconium oxychloride such that the yttrium content was 2.5 mol%, and the mixture was dried. Subsequently, the resulting dried product was heat-treated in an air atmosphere at 1,160°C for two hours to obtain a calcined powder including, as a matrix, an yttrium-containing zirconia (yttrium-stabilized zirconia) having an yttrium content of 2.5 mol%. The obtained calcined powder and pure water were mixed, and the mixture was ground in a ball mill for 18 hours using beads with a diameter of 2 mm as grinding media to prepare a slurry containing a powder that included, as a matrix, a zirconia having an yttrium content of 2.5 mol% and that had a BET specific surface area of 11.9 $m^2$/g (powder of yttrium-stabilized zirconia). This was used as a slurry A of Example 1.

A slurry containing a powder that included, as a matrix, a zirconia having an yttrium content of 5.5 mol% (yttrium-stabilized zirconia) and that had a BET specific surface area of 9.7 $m^2$/g was obtained by the same method as that in the slurry A except that yttrium was mixed such that the yttrium content was 5.5 mol%, and the grinding was performed for 10 hours. This was used as a slurry B of Example 1. The BET specific surface area of the powder contained in the slurry A was 2.2 $m^2$/g larger than the BET specific surface area of the powder contained in the slurry B.

The slurry A was added to and mixed with the slurry B being stirred such that the yttrium content in a powder composition was 4.5 mol%. The resulting mixture was then dried at 110°C under air circulation to obtain a powder composition that included, as a matrix, a zirconia having an yttrium content of 4.5 mol% (yttrium-stabilized zirconia) and that had a BET specific surface area of 10.4 $m^2$/g. The difference in stabilizing element content between the two stabilized zirconias included in the powder composition (stabilized zirconia powders contained in the two slurries) was 3.0 mol%.

[Example 2]

The slurry A was added to and mixed with the slurry B such that the yttrium content in a powder composition was 5.2 mol%. Except for this, a powder composition that included, as a matrix (main component), a zirconia having an yttrium content of 5.2 mol% (yttrium-stabilized zirconia) and that had a BET specific surface area of 9.9 $m^2$/g was obtained by the same method as in Example 1. The difference in stabilizing element content between the two stabilized zirconias included in the powder composition was 3.0 mol%.

[Example 3]

After the mixture of the hydrated zirconia sol and yttria was dried, the mixture was heat-treatment in an air atmosphere at 1,125°C for six hours, and the grinding time with the ball mill was changed to eight hours. Except for this, a slurry containing a powder that included, as a matrix, a zirconia having an yttrium content of 2.5 mol% (yttrium-stabilized zirconia) and that had a BET specific surface area of 9.7 $m^2$/g was obtained by the same method as in Example 1. This was used as a slurry A of Example 3. The BET specific surface area of the powder contained in the slurry A was equal to the BET specific surface area of the powder contained in the slurry B of Example 1.

The slurry A of Example 3 was added to and mixed with the slurry B of Example 1 such that the yttrium content in a powder composition was 5.2 mol%. Except for this, a powder composition that included, as a matrix, a zirconia having an yttrium content of 5.2 mol% (yttrium-stabilized zirconia) and that had a BET specific surface area of 9.7 $m^2$/g was obtained by the same method as in Example 1. The difference in stabilizing element content between the two stabilized zirconias included in the powder composition was 3.0 mol%.

[Example 4]

After the mixture of the hydrated zirconia sol and yttria was dried, the resulting dried product was heat-treated in an air atmosphere at 1,045°C for six hours, and the grinding time with the ball mill was changed to seven hours. Except for this, a slurry containing a powder that included, as a matrix, a zirconia having an yttrium content of 2.5 mol% (yttrium-stabilized zirconia) and that had a BET specific surface area of 14.4 $m^2$/g was obtained by the same method as in Example 1. This was used as a slurry A of Example 4. The BET specific surface area of the powder contained in the slurry A was 4.7 $m^2$/g larger than the BET specific surface area of the powder contained in the slurry B of Example 1.

A powder composition that included, as a matrix, a zirconia having an yttrium content of 5.2 mol% (yttrium-stabilized zirconia) and that had a BET specific surface area of 10.2 $m^2$/g was obtained by the same method as in Example 1 except that the slurry A of Example 4 was added to and mixed with the slurry B of Example 1 such that the yttrium content in the powder composition was 5.2 mol%. The difference in stabilizing element content between the two stabilized zirconias included in the powder composition was 3.0 mol%.

[Example 5]

The slurry A was added to and mixed with the slurry B such that the yttrium content in a powder composition was 5.4 mol%. Except for this, the powder composition that included, as a matrix, a zirconia having an yttrium content of 5.4 mol% and that had a BET specific surface area of 9.8 $m^2$/g was obtained by the same method as in Example 1. The difference in stabilizing element content between the two stabilized zirconias included in the powder composition was 3.0 mol%.

[Example 6]

After the mixture of the hydrated zirconia sol and yttria was dried, the resulting dried product was heat-treated in an air atmosphere at 1,145°C. Except for this, a slurry containing a powder that included, as a matrix, a zirconia having an yttrium content of 5.5 mol% (yttrium-stabilized zirconia) and that had a BET specific surface area of 10.8 $m^2$/g was obtained by the same method as in Example 1. This was used as a slurry B of Example 6. The slurry A of Example 4 was used as a slurry A. The BET specific surface area of the powder contained in the slurry A was 3.6 $m^2$/g larger than the BET specific surface area of the powder contained in the slurry B.

A powder composition that included, as a matrix, a zirconia having an yttrium content of 5.2 mol% (yttrium-stabilized zirconia) and that had a BET specific surface area of 11.2 $m^2$/g was obtained by the same method as in Example 1 except that the slurry A of Example 4 was added to and mixed with the slurry B such that the yttrium content in the powder composition was 5.2 mol%. The difference in stabilizing element content between the two stabilized zirconias included in the powder composition was 3.0 mol%.

[Example 7]

Yttria was mixed such that the yttrium content in an yttrium-stabilized zirconia was 1.5 mol%. Except for this, a slurry containing a powder that included, as a matrix, a zirconia having an yttrium content of 1.5 mol% and that had a BET specific surface area of 11.9 $m^2$/g (powder of yttrium-stabilized zirconia) was obtained by the same method as that in the slurry A of Example 1. This was used as a slurry A of Example 7. The slurry B of Example 1 was used as a slurry B. The BET specific surface area of the powder contained in the slurry A of Example 7 was 2.2 $m^2$/g larger than the BET specific surface area of the powder contained in the slurry B of Example 1.

A powder composition that included, as a matrix, a zirconia having an yttrium content of 5.2 mol% (yttrium-stabilized zirconia) and that had a BET specific surface area of 9.9 m$^2$/g was obtained by the same method as in Example 1 except that the slurry A was added to and mixed with the slurry B such that the yttrium content in the powder composition was 5.2 mol%. The difference in stabilizing element content between the two stabilized zirconias included in the powder composition was 4.0 mol%.

[Example 8]

Yttria was mixed such that the yttrium content in an yttrium-stabilized zirconia was 6.5 mol%. Except for this, a slurry containing a powder that included, as a matrix, a zirconia having an yttrium content of 6.5 mol% and that had a BET specific surface area of 10.3 m$^2$/g (powder of yttrium-stabilized zirconia) was obtained by the same method as that in the slurry B of Example 1. This was used as a slurry B of Example 8. The slurry A of Example 1 was used as a slurry A. The BET specific surface area of the powder contained in the slurry A of Example 1 was 1.6 m$^2$/g larger than the BET specific surface area of the powder contained in the slurry B of Example 8.

The slurry A was added to and mixed with the slurry B such that the yttrium content in a powder composition was 5.2 mol%. Except for this, the powder composition that included, as a matrix, a zirconia having an yttrium content of 5.2 mol% and that had a BET specific surface area of 10.8 m$^2$/g was obtained by the same method as in Example 1. The difference in stabilizing element content between the two stabilized zirconias included in the powder composition was 4.0 mol%.

[Example 9]

Using the slurry A and the slurry B of Example 1, the slurry A was added to the slurry B being stirred such that the yttrium content in a powder composition was 5.0 mol% to prepare a slurry mixture. The slurry mixture was mixed at a stirring power of 0.5 kW/m$^3$ for 0.5 hours and then dried. Thus, a powder composition that included, as a matrix, a zirconia having an yttrium content of 5.0 mol% (yttrium-stabilized zirconia) and that had a BET specific surface area of 10.1 m$^2$/g was obtained. The difference in stabilizing element content between the two stabilized zirconias included in the powder composition was 3.0 mol%.

[Example 10]

Using the slurry A and the slurry B of Example 1, the slurry A was added to the slurry B being stirred such that the yttrium content in a powder composition was 5.0 mol% to prepare a slurry mixture. The slurry mixture was mixed at a stirring power of 0.01 kW/m$^3$ for 0.5 hours and then dried. Thus, a powder composition that included, as a matrix, a zirconia having an yttrium content of 5.0 mol% (yttrium-stabilized zirconia) and that had a BET specific surface area of 10.1 m$^2$/g was obtained. The difference in stabilizing element content between the two stabilized zirconias included in the powder composition was 3.0 mol%.

[Comparative Example 1]

A hydrated zirconia sol prepared by hydrolyzing an aqueous solution of zirconium oxychloride and yttria were mixed such that the yttrium content was 2.5 mol%, and dried. The resulting dried product was heat-treated in an air atmosphere at 1,160°C for two hours to obtain a powder including, as a matrix, a zirconia having an yttrium content of 2.5 mol%. The obtained powder, $\alpha$-alumina, and pure water were mixed. The mixing was performed by grinding in a ball mill for eight hours using beads with a diameter of 2 mm as grinding media. Thus, a slurry containing a powder that included, as a matrix, a zirconia having an yttrium content of 2.5 mol%, that contained 0.05 mass% of alumina, and that had a BET specific surface area of 10.0 m$^2$/g (powder of alumina-containing yttrium-stabilized zirconia) was obtained. This was used as a slurry A of Comparative Example 1.

A slurry containing a powder that included, as a matrix, a zirconia having an yttrium content of 5.5 mol%, that contained 0.05 mass% of alumina, and that had a BET specific surface area of 10.0 m$^2$/g was obtained by the same method as that in the slurry A except that the yttrium content in the yttrium-stabilized zirconia was 5.5 mol%, and the grinding mixing time with the ball mill was 10 hours. This was used as a slurry B of Comparative Example 1. The BET specific surface area of the powder contained in the slurry A was equal to the BET specific surface area of the powder contained in the slurry B.

The slurry A and the slurry B were mixed such that the yttrium content in a powder composition was 4.0 mol%, and then dried. Thus, the powder composition that included, as a matrix, a zirconia having an yttrium content of 4.0 mol%, that contained 0.05 mass% of alumina, and that had a BET specific surface area of 10.0 m$^2$/g was obtained. The difference in stabilizing element content between the stabilized zirconias included in the powder composition was 3.0 mol%.

[Comparative Example 2]

Yttria was mixed such that the yttrium content in an yttrium-stabilized zirconia was 1.5 mol%, and heat treatment was conducted at 1,130°C. Other than that, a slurry containing a powder that included, as a matrix, a zirconia having an yttrium content of 1.5 mol% and an alumina content of 0.05 mass% and that had a BET specific surface area of 11.4 $m^2$/g was obtained by the same method as that in the slurry A of Comparative Example 1. This was used as a slurry A of Comparative Example 2. The BET specific surface area of the powder contained in this slurry A was 1.4 $m^2$/g larger than the BET specific surface area of the powder contained in the slurry B of Comparative Example 1.
The slurry A and the slurry B were mixed by the same method as in Comparative Example 1 except that the obtained slurry A was used. Thus, a powder composition that included, as a matrix, a zirconia having an yttrium content of 5.2 mol%, that contained 0.05 mass% of alumina, and that had a BET specific surface area of 10.1 $m^2$/g was obtained. The difference in stabilizing element content between the stabilized zirconias included in the powder composition was 4.0 mol%.

[Comparative Example 3]

A powder composition of Comparative Example 3 was obtained by the same method as that of Example 12 of Japanese Unexamined Patent Publication No. 2021-059489. That is, yttria was mixed such that the yttrium content in an yttrium-stabilized zirconia was 2.0 mol%, and α-alumina was not mixed. Other than that, a slurry containing a powder that included, as a matrix, a zirconia having an yttrium content of 2.0 mol% and that had a BET specific surface area of 10.2 $m^2$/g was obtained by the same method as that in the slurry A of Comparative Example 1. This was used as a slurry A of Comparative Example 3. The BET specific surface area of the powder contained in this slurry A was 2.2 $m^2$/g smaller than the BET specific surface area of the powder contained in a slurry B of Comparative Example 3.
A slurry was prepared by the same method as that in the slurry B of Comparative Example 1 except that yttria was mixed such that the yttrium content in an yttrium-stabilized zirconia was 8.5 mol%, the heat-treatment temperature was 1,130°C, and α-alumina was not mixed. Thus, a slurry containing a powder that included, as a matrix, a zirconia having an yttrium content of 8.5 mol% and that had a BET specific surface area of 12.4 $m^2$/g was obtained. This was used as the slurry B of Comparative Example 3.
The obtained slurry A and slurry B were used. Except for this, a powder composition that included, as a matrix, a zirconia having an yttrium content of 5.2 mol% and that had a BET specific surface area of 11.3 $m^2$/g was obtained by the same method as in Comparative Example 1. The difference in stabilizing element content between the stabilized zirconias included in the powder composition was 6.5 mol%.

[Comparative Example 4]

A slurry containing a powder that included, as a matrix, a zirconia having an yttrium content of 5.5 mol% and that had a BET specific surface area of 10.0 $m^2$/g was obtained by the same method as that in the slurry B of Comparative Example 1. This was used as a slurry B of Comparative Example 4.
The obtained slurry B was dried to obtain a powder that included, as a matrix, a zirconia having an yttrium content of 5.5 mol%, that contained 0.05 mass% of alumina, and that had a BET specific surface area of 10.0 $m^2$/g (powder of alumina-containing yttrium-stabilized zirconia). This was used as a powder (powder composition) of Comparative Example 4.

[Comparative Example 5]

A slurry containing a powder that included, as a matrix, a zirconia having an yttrium content of 5.5 mol% and that had a BET specific surface area of 10.0 $m^2$/g was obtained by the same method as that in the slurry B of Comparative Example 1 except that α-alumina was not mixed. This was used as a slurry B of Comparative Example 5.
The obtained slurry B was dried to obtain a powder that included, as a matrix, a zirconia having an yttrium content of 5.5 mol% and that had a BET specific surface area of 10.0 $m^2$/g (powder of yttrium-stabilized zirconia). This was used as a powder (powder composition) of Comparative Example 5.

[Comparative Example 6]

A slurry containing a powder that included, as a matrix, a zirconia having an yttrium content of 2.5 mol% and that had a BET specific surface area of 11.3 $m^2$/g was obtained by the same method as that in the slurry A of Comparative Example 1 except that α-alumina was not mixed, and the calcination temperature was 1,140°C. This was used as a slurry A of Comparative Example 6.

A slurry was prepared by the same method as that in the slurry B of Comparative Example 1 except that yttria was mixed such that the yttrium content in an yttrium-stabilized zirconia was 7.5 mol%, and α-alumina was not mixed. Thus, a slurry containing a powder that included, as a matrix, a zirconia having an yttrium content of 7.5 mol% and that had a BET specific surface area of 11.9 $m^2/g$ was obtained. This was used as a slurry B of Comparative Example 6. The BET specific surface area of the powder contained in the slurry A was 0.6 $m^2/g$ smaller than the BET specific surface area of the powder contained in the slurry B.

A powder composition that included, as a matrix, a zirconia having an yttrium content of 6.0 mol% and that had a BET specific surface area of 11.6 $m^2/g$ was obtained by the same method as in Comparative Example 1 except that the obtained slurry A and slurry B were used, and both the slurries were mixed such that the yttrium content was 6.0 mol%. This was used as a powder composition of Comparative Example 6. The difference in stabilizing element content between the stabilized zirconias included in the powder composition was 6.0 mol%.

Table 1 shows the stabilizing element contents ($Y_2O_3$: mol%) in the powders contained in each of the slurries prepared in Examples and Comparative Examples and the difference in stabilizing element content (difference in $Y_2O_3$). Table 2 shows the stabilizing element content (mol% of $Y_2O_3$), the content of an additional element in terms of oxide, and properties of each of the powder compositions obtained in Examples and Comparative Examples.

[Table 1]

| | Powder in slurry A | | Powder in slurry B | | Difference in $Y_2O_3$ (mol%) |
| --- | --- | --- | --- | --- | --- |
| | $Y_2O_3$ (mol%) | BET specific surface area ($m^2/g$) | $Y_2O_3$ (mol%) | BET specific surface area ($m^2/g$) | |
| Example 1 | 2.5 | 11.9 | 5.5 | 9.7 | 3.0 |
| Example 2 | 2.5 | 11.9 | 5.5 | 9.7 | 3.0 |
| Example 3 | 2.5 | 9.7 | 5.5 | 9.7 | 3.0 |
| Example 4 | 2.5 | 14.4 | 5.5 | 9.7 | 3.0 |
| Example 5 | 2.5 | 11.9 | 5.5 | 9.7 | 3.0 |
| Example 6 | 2.5 | 14.4 | 5.5 | 10.8 | 3.0 |
| Example 7 | 1.5 | 11.9 | 5.5 | 9.7 | 4.0 |
| Example 8 | 2.5 | 11.9 | 6.5 | 10.3 | 4.0 |
| Example 9 | 2.5 | 11.9 | 5.5 | 9.7 | 3.0 |
| Example 10 | 2.5 | 11.9 | 5.5 | 9.7 | 3.0 |
| Comparative Example 1 | 2.5 | 10.0 | 5.5 | 10.0 | 3.0 |
| Comparative Example 2 | 1.5 | 11.4 | 5.5 | 10.0 | 4.0 |
| Comparative Example 3 | 2.0 | 10.2 | 8.5 | 12.4 | 6.5 |
| Comparative Example 4 | Not used | | 5.5 | 10.0 | 0 |
| Comparative Example 5 | Not used | | 5.5 | 10.0 | 0 |
| Comparative Example 6 | 2.5 | 11.3 | 7.5 | 11.9 | 6.0 |

[Table 2]

| | Powder composition | | | | | | |
| --- | --- | --- | --- | --- | --- | --- | --- |
| | $Y_2O_3$ (mol%) | $Al_2O_3$ (wt%) | BET specific surface area ($m^2/g$) | T+C phase fraction (%) | $\Delta V_{1300}$ (%°$C^{-1}$) | $\Delta V_{1500}$ (%°$C^{-1}$) | $\Delta V_{1300}$ $\Delta V_{1500}$ (%°$C^{-1}$) |
| Example 1 | 4.5 | 0 | 10.4 | - | 0.061 | 0.021 | 0.040 |

(continued)

| | Powder composition | | | | | | |
|---|---|---|---|---|---|---|---|
| | $Y_2O_3$ (mol%) | $Al_2O_3$ (wt%) | BET specific surface area ($m^2/g$) | T+C phase fraction (%) | $\Delta V_{1300}$ (%°C$^{-1}$) | $\Delta V_{1500}$ (%°C$^{-1}$) | $\dfrac{\Delta V_{1300}}{\Delta V_{1500}}$ (%°C$^{-1}$) |
| Example 2 | 5.2 | 0 | 9.9 | 90 | 0.058 | 0.017 | 0.041 |
| Example 3 | 5.2 | 0 | 9.7 | 92 | 0.056 | 0.026 | 0.030 |
| Example 4 | 5.2 | 0 | 10.2 | 91 | 0.059 | 0.020 | 0.039 |
| Example 5 | 5.4 | 0 | 9.8 | - | 0.061 | 0.019 | 0.042 |
| Example 6 | 5.2 | 0 | 10.8 | 94 | 0.061 | 0.017 | 0.044 |
| Example 7 | 5.2 | 0 | 9.7 | 85 | 0.056 | 0.015 | 0.041 |
| Example 8 | 5.2 | 0 | 10.3 | 65 | 0.062 | 0.021 | 0.041 |
| Example 9 | 5.0 | 0 | 9.7 | 85 | 0.059 | 0.018 | 0.041 |
| Example 10 | 5.0 | 0 | 9.7 | 85 | 0.059 | 0.017 | 0.042 |
| Comparative Example 1 | 4.0 | 0.05 | 10.0 | 71 | 0.075 | 0.012 | 0.063 |
| Comparative Example 2 | 5.2 | 0.05 | 10.1 | 90 | 0.075 | 0.009 | 0.066 |
| Comparative Example 3 | 5.2 | 0 | 11.3 | 62 | 0.062 | 0.013 | 0.049 |
| Comparative Example 4 | 5.5 | 0.05 | 10.0 | 99 | 0.073 | 0.010 | 0.063 |
| Comparative Example 5 | 5.5 | 0 | 10.0 | 99 | 0.068 | 0.014 | 0.054 |
| Comparative Example 6 | 6.0 | 0 | 11.6 | 62 | 0.065 | 0.013 | 0.052 |
| In Table, "-" indicates unmeasured. | | | | | | | |

In Examples 2 to 4 and 6 to 8, the stabilizing element contents (yttrium contents) of the powder compositions are equal to each other. Compared with Example 2, in Example 4, the yttrium-containing zirconia having an yttrium content of 2.5 mol% has a high BET specific surface area, and $\Delta V_{1300}$ and $\Delta V_{1500}$ of the powder composition can be confirmed to be fast. Furthermore, in Example 3, which included an yttrium-containing zirconia having an yttrium content of 2.5 mol%, the yttrium-containing zirconia having a lower BET specific surface area than Example 2, the BET specific surface area of the resulting powder composition was also low, but $\Delta V_{1500}$ was faster than that in Example 2. Comparison between Example 4 and Comparative Example 2 can confirm that containing alumina increases $\Delta V_{1300}$.

In Example 7, the yttrium content of the yttrium-containing zirconia having a lower yttrium content is lower than that in Example 2. In this case, $\Delta V_{1300}$ and $\Delta V_{1500}$ in Example 7 can be confirmed to be slower than those in Example 2. Compared with Example 2, in Example 8, the yttrium content of the yttrium-containing zirconia having a higher yttrium content is 6.5 mol%, which is higher than that in Example 2, and $\Delta V_{1300}$ and $\Delta V_{1500}$ can be confirmed to be fast.

Compared with Example 4, in Example 6, the BET specific surface area of the yttrium-containing zirconia having an yttrium content of 5.5 mol% is high, and it can be confirmed that $\Delta V_{1300}$ of the powder composition is fast, and $\Delta V_{1500}$ is slow.

<Measurement of stabilizing element content by STEM-EDS>

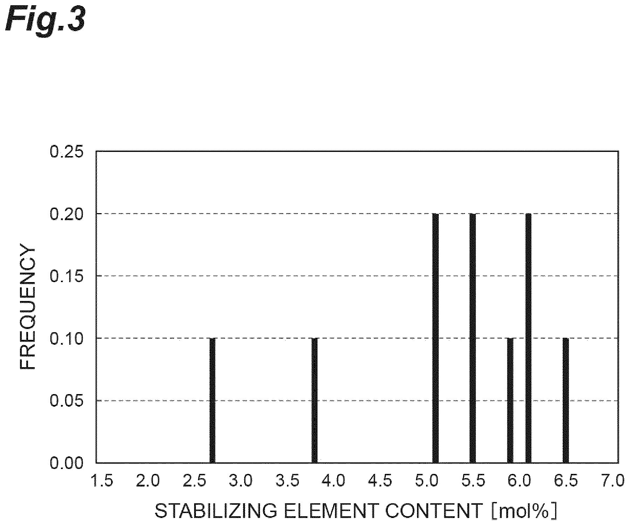

The stabilizing element content of the powder composition obtained in Example 2 was determined by STEM-EDS measurement (n = 1). Specifically, the chemical compositions of 10 powder particles without overlapping were measured, and the frequency was determined when the data interval (class interval) of the stabilizing element content was 0.1 mol%. The measurement results were as shown in Fig. 3. The maximum value of the yttrium content of the yttrium-containing zirconia powder particles was 6.5 mol%, and the minimum value was 2.7 mol%. Accordingly, the difference between the maximum value and the minimum value (distribution width) of the yttrium content was 3.8 mol%. It could be confirmed from this that the powder composition obtained in Example 2 included two or more stabilized zirconias having stabilizing element contents different from each other.

The STEM-EDS measurement of the powder composition obtained in Example 2 was further performed twice (n = 2, n = 3). Each measurement was performed using different powder particles. These measurements were performed as in the case of n = 1.

The distribution width (the difference between the maximum value and the minimum value) of the yttrium content was 3.8 mol% in n = 1, 4.4 mol% in n = 2, and 3.7 mol% in n = 3. It could be confirmed from these results that, the powder composition of Example 2 had a sufficiently small variation in the distribution width. Thus, it could be confirmed that, in the powder composition of Example 2, stabilized zirconia particles having yttrium contents different from each other were dispersed with high uniformity.

The STEM-EDS measurement of the powder composition obtained in Comparative Example 5 was performed by the same procedure as that in the powder composition of Example 2 (only n = 1). According to the results, the maximum value of the yttrium content of zirconia powder particles was 6.4 mol%, and the minimum value was 4.9 mol%. Thus, the difference between the maximum value and the minimum value (distribution width) of the yttrium content was 1.5 mol%. The difference in $Y_2O_3$ of Comparative Example 5 shown in Table 1 is also 0 mol%; therefore, it could be confirmed that the powder composition obtained in Comparative Example 5 did not include two or more stabilized zirconias having different stabilizing element contents.

<Production of calcined body>

[Examples 11 to 17, Comparative Example 7, and Comparative Example 9]

Powder compositions obtained by the same methods as those in Examples 2 and 5 to 10 and Comparative Examples 2, 3, and 5 were each placed in a die with a diameter of 25 mm, subjected to uniaxial pressing at a pressure of 49 MPa, and subjected to CIP treatment at a pressure of 196 MPa to obtain green bodies. The green bodies were calcined in an air atmosphere at a calcination temperature of 1,000°C for one hour to obtain calcined bodies of Examples 11 and 17 and calcined bodies of Comparative Examples 7 to 9. Table 3 shows the powder compositions used in Examples and Comparative Examples and properties of the calcined bodies.

[Table 3]

| | Precursor (Powder composition) | Calcined body density (g/cm$^3$) | Vickers hardness (kgf/mm$^2$) | phase fraction (%) | $\Delta V_{1300}$ (%°C$^{-1}$) | $\Delta V_{1500}$ (%°C$^{-1}$) | $\Delta V_{1300}$ - $\Delta V_{1500}$ (%°C$^{-1}$) |
|---|---|---|---|---|---|---|---|
| Example 11 | Example 2 | 3.08 | - | 100 | 0.060 | 0.023 | 0.037 |
| Example 12 | Example 5 | 3.02 | - | - | 0.061 | 0.017 | 0.044 |
| Example 13 | Example 6 | 3.09 | 46 | 100 | 0.062 | 0.018 | 0.044 |
| Example 14 | Example 7 | 3.09 | 45 | 100 | 0.057 | 0.014 | 0.043 |
| Example 15 | Example 8 | 3.09 | 44 | 100 | 0.061 | 0.019 | 0.042 |
| Example 16 | Example 9 | 3.09 | 46 | 100 | 0.058 | 0.017 | 0.041 |
| Example 17 | Example 10 | 3.08 | 46 | 100 | 0.060 | 0.019 | 0.041 |
| Comparative Example 7 | Comparative Example 2 | 3.05 | 49 | 100 | 0.078 | 0.009 | 0.069 |
| Comparative Example 8 | Comparative Example 3 | 3.11 | - | - | 0.063 | 0.013 | 0.050 |
| Comparative Example 9 | Comparative Example 5 | 3.09 | 40 | - | - | - | - |
| In Table, "-" indicates unmeasured. | | | | | | | |

$\Delta V_{1300}$ of Example 2 is 0.058%°C$^{-1}$, and $\Delta V_{1300}$ of Example 11 is 0.060%°C$^{-1}$. It can be confirmed from this that a powder composition and a calcined body obtained by calcining the powder composition have $\Delta V_{1300}$ equivalent to each other. The calcined body of Example 11 has a T + C phase fraction of 100%. It can be confirmed from this that the T + C phase fraction of the calcined body becomes higher than that of the powder composition through the heat treatment. It can be confirmed that Examples 12 to 17 and Examples 5 to 10, which are corresponding precursors, have $\Delta V_{1300}$ equivalent to each other. It can be confirmed that the calcined bodies of Examples 13 to 17 have a T + C phase fraction of 100%.

The calcined bodies of Examples can be confirmed to have a Vickers hardness suitable for shape processing such as CAM processing.

<Measurement of stabilizing atomic weight (yttrium content) by STEM-EDS>

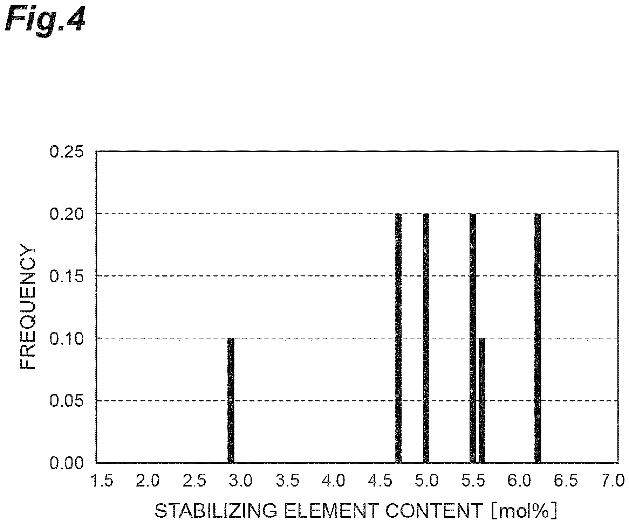

The calcined body obtained in Example 11 was dry-ground in a mortar, and the yttrium content in the calcined body was measured by STEM-EDS measurement as in the powder composition of Example 2. The measurement results were as shown in Fig. 4. The maximum value of the yttrium content of stabilized zirconia powder particles was 6.2 mol%, and the minimum value was 2.9 mol%. Accordingly, the difference between the maximum value and the minimum value (distribution width) of the yttrium content was 3.3 mol%. It could be confirmed from this that the calcined body obtained in Example 11 included two or more stabilized zirconias having different amounts of stabilizing element.

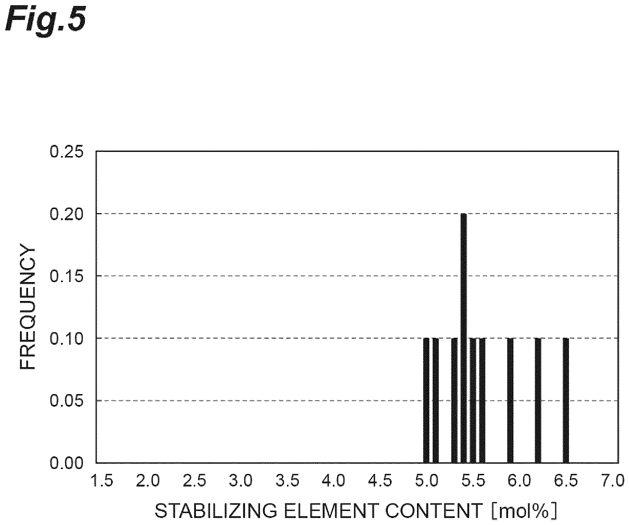

The yttrium content of the calcined body obtained in Comparative Example 9 was measured as in Example 11. The measurement results were as shown in Fig. 5. The maximum value of the yttrium content of stabilized zirconia powder particles was 6.5 mol%, and the minimum value was 5.0 mol%. Accordingly, the difference between the maximum value and the minimum value (distribution width) of the yttrium content was 1.5 mol%. The difference in $Y_2O_3$ of Comparative Example 5 shown in Table 1 is also 0 mol%; therefore, it could be confirmed that the calcined body obtained in Comparative Example 9 did not include two or more stabilized zirconias having different stabilizing element contents.

<Production of sintered body>

[Examples 18 to 27 and Comparative Examples 10 to 15]

The powder compositions obtained in Examples 1 to 10 and the powder compositions and the powders obtained in Comparative Examples 1 to 6 were each placed in a die with a diameter of 25 mm, subjected to uniaxial pressing at a pressure of 49 MPa, and subjected to CIP treatment at a pressure of 196 MPa to obtain green bodies.

The green bodies were calcined in an air atmosphere at a calcination temperature of 1,000°C for one hour to obtain calcined bodies. The temperature of the calcined bodies was increased in an air atmosphere at a rate of temperature increase of 250 °C/min from room temperature to 1,050°C and at a rate of temperature increase of 50 °C/min from 1,050°C to 1,580°C. After the temperature increase, the temperature was held at a sintering temperature of 1,580°C for eight minutes and then decreased to 900°C at 60 °C/min. Subsequently, the resulting sintered bodies were taken out from a sintering furnace (hereinafter, also referred to as a "short-time sintering program") to obtain sintered bodies (hereinafter, also referred to as "short-time sintered bodies") of Examples 18 to 27 and Comparative Examples 10 to 15.

In addition, calcined bodies obtained by the same procedures were sintered in an air atmosphere at a rate of temperature increase of 600 °C/hour and at a sintering temperature of 1,500°C for two hours to obtain sintered bodies (hereinafter, also referred to as "normal sintered bodies"). The ratio of the light transmittance of the short-time sintered boy to the light transmittance of the normal sintered boy obtained as described above (light transmittance ratio) [%] was determined. The results are shown in Table 4.

[Table 4]

| | Precursor (Powder composition) | Light transmittance (%) | | Light transmittance ratio (%) |
|---|---|---|---|---|
| | | Normal sintered body | Short-time sintered body | |
| Example 18 | Example 1 | 46.8 | 46.8 | 100 |
| Example 19 | Example 2 | 48.7 | 47.6 | 98 |
| Example 20 | Example 3 | 48.9 | 48.1 | 98 |
| Example 21 | Example 4 | 48.8 | 49.0 | 100 |
| Example 22 | Example 5 | 49.8 | 45.5 | 91 |
| Example 23 | Example 6 | 48.1 | 48.7 | 101 |
| Example 24 | Example 7 | 48.4 | 48.7 | 101 |
| Example 25 | Example 8 | 47.9 | 47.7 | 100 |
| Example 26 | Example 9 | 47.6 | 47.3 | 99 |
| Example 27 | Example 10 | 47.3 | 47.1 | 100 |

(continued)

| | Precursor (Powder composition) | Light transmittance (%) | | Light transmittance ratio (%) |
|---|---|---|---|---|
| | | Normal sintered body | Short-time sintered body | |
| Comparative Example 10 | Comparative Example 1 | 45.0 | 45.0 | 100 |
| Comparative Example 11 | Comparative Example 2 | 48.4 | 41.8 | 86 |
| Comparative Example 12 | Comparative Example 3 | 48.4 | 43.1 | 89 |
| Comparative Example 13 | Comparative Example 4 | 49.0 | 30.9 | 63 |
| Comparative Example 14 | Comparative Example 5 | 49.0 | 42.1 | 86 |
| Comparative Example 15 | Comparative Example 6 | 52.5 | 18.5 | 35 |

Although the normal sintered body of Comparative Example 10 had a low light transmittance, all the other normal sintered bodies could be confirmed to have a light transmittance of more than 45%.

The sintered bodies (short-time sintered bodies) of Examples each have a light transmittance of more than 45% and can be confirmed to have translucency applicable to prosthetic anterior teeth. In contrast, the sintered bodies (short-time sintered bodies) of Comparative Examples each had a light transmittance of 45% or less and did not have translucency required for prosthetic anterior teeth.

In Comparative Example 10 having an yttrium content of 4.0 mol%, it could be confirmed that there was no change in translucency between the normal sintered body and the short-time sintered body, although $\Delta V_{1300}$ exceeded 0.07%°C$^{-1}$. However, in Comparative Example 10, even the normal sintered body had a light transmittance of 45% or less and did not have translucency applicable to prosthetic anterior teeth.

It can be confirmed that the short-time sintered body of Comparative Example 11, which was obtained from the powder composition of Comparative Example 2 having $\Delta V_{1300}$ of more than 0.07%°C$^{-1}$, has translucency significantly lower than that of the normal sintered body and does not have translucency applicable to prosthetic anterior teeth.

The powder composition of Comparative Example 3 including a stabilized zirconia having an yttrium content of more than 8.0 mol%, the powder of Comparative Example 5 that does not include two or more stabilized zirconias having different contents of the stabilizing element, and the powder composition of Comparative Example 6 having a stabilizing element content (yttrium content) of 5.8 mol% or more have $\Delta V_{1300}$ of 0.07%°C$^{-1}$ or less. Nevertheless, in all of Comparative Examples 12, 14, and 15 using these powder compositions, the translucency of the short-time sintered body was significantly lower than that of the normal sintered body. Thus, it could be confirmed that translucency applicable to prosthetic anterior teeth was not obtained.

Table 5 shows the evaluation results of the short-time sintered bodies obtained in Examples 19 to 27 and Comparative Examples 10 to 14.

[Table 5]

| | Average crystal grain size ($\mu$m) | Difference in crystal grain size ($\mu$m) | T' phase fraction (%) | C phase fraction (%) | Biaxial flexural strength (MPa) |
|---|---|---|---|---|---|
| Example 19 | 1.1 | 0.027 | 100 | 0 | 745 |
| Example 20 | 1.1 | 0.034 | 100 | 0 | 773 |
| Example 21 | 1.0 | 0.013 | 100 | 0 | 802 |
| Example 23 | 1.0 | 0.026 | 100 | 0 | 832 |
| Example 24 | 1.0 | 0.031 | 100 | 0 | 801 |
| Example 25 | 0.99 | 0.029 | 100 | 0 | 817 |

(continued)

|  | Average crystal grain size ($\mu$m) | Difference in crystal grain size ($\mu$m) | T' phase fraction (%) | C phase fraction (%) | Biaxial flexural strength (MPa) |
|---|---|---|---|---|---|
| Example 26 | 0.81 | 0.021 | 100 | 0 | 880 |
| Example 27 | 0.83 | 0.025 | 100 | 0 | 797 |
| Comparative Example 10 | 0.59 | 0.011 | 51 | 0 | - |
| Comparative Example 11 | 1.7 | - | 100 | 0 | - |
| Comparative Example 12 | 1.1 | - | 100 | 0 | - |
| Comparative Example 13 | 2.9 | 0.111 | 100 | 0 | - |
| Comparative Example 14 | 1.9 | 0.103 | 100 | 0 | - |
| In Table, "-" indicates unmeasured. | | | | | |

The sintered bodies of Examples shown in Table 5 each had an average crystal grain size of 2.5 $\mu$m or less and also had a small difference in crystal grain size. These were each a sintered body including, as a matrix, a stabilized zirconia having a tetragonal prime phase as a main phase. That is, it can be confirmed that these are each a sintered body of a stabilized zirconia having a tetragonal prime phase as a crystalline phase. The sintered body of Example 19 had a biaxial flexural strength of 745 MPa. It could be confirmed that the sintered bodies of Examples each had a difference in crystal grain size of 0.10 $\mu$m or less. It could be confirmed that the sintered bodies of Examples 21 to 26 had a biaxial flexural strength of 800 MPa or more and, therefore, were also applicable to a connecting bridge of four or more teeth based on JIS T 6526.

The sintered body of Example 26 had a Weibull coefficient of 8.0, and the sintered body of Example 27 had a Weibull coefficient of 3.2. Thus, the sintered body of Example 26 in which the stirring power was adjusted to a preferred range in the preparation of the powder composition could have a higher Weibull coefficient than the sintered body of Example 27.

The entire contents of the specification, claims, and abstract of Japanese Patent Application No. 2021-150878 filed on September 16, 2021 are cited herein and incorporated as the disclosure of the specification of the present disclosure.

**Claims**

1. A powder composition comprising:

   two or more stabilized zirconias having different contents of a stabilizing element,
   wherein the powder composition has a content of the stabilizing element of more than 4.0 mol% and 5.8 mol% or less, a rate of change in thermal shrinkage rate per unit temperature at 1,300°C is 0.07%°C$^{-1}$ or less, and the contents of the stabilizing element of the stabilized zirconias are each 8.0 mol% or less.

2. The powder composition according to claim 1,

   wherein the stabilized zirconias include
   a first stabilized zirconia having a content of the stabilizing element of 1.0 mol% or more and 5.0 mol% or less, and
   a second stabilized zirconia having a content of the stabilizing element of 3.0 mol% or more and 8.0 mol% or less.

3. The powder composition according to claim 1 or 2,
   wherein a rate of change in thermal shrinkage rate per unit temperature at 1,500°C is 0.02%°C$^{-1}$ or more.

4. The powder composition according to any one of claims 1 to 3,
   wherein the stabilizing element includes one or more selected from the group consisting of yttrium, calcium, and magnesium.

5. The powder composition according to any one of claims 1 to 4,

wherein a BET specific surface area is 8 m$^2$/g or more and 13 m$^2$/g or less.

6. The powder composition according to any one of claims 1 to 5,
wherein a proportion of a tetragonal phase and a cubic phase in a crystalline phase is 65% or more.

7. A calcined body comprising:

two or more stabilized zirconias having different contents of a stabilizing element,
wherein the calcined body has a content of the stabilizing element of more than 4.0 mol% and 5.8 mol% or less,
a rate of change in thermal shrinkage rate per unit temperature at 1,300°C is 0.07%°C$^{-1}$ or less, and the contents
of the stabilizing element of the stabilized zirconias are each 8.0 mol% or less.

8. The calcined body according to claim 7,

wherein the stabilized zirconias include
a first stabilized zirconia having a content of the stabilizing element of 1.0 mol% or more and 5.0 mol% or less, and
a second stabilized zirconia having a content of the stabilizing element of 3.0 mol% or more and 8.0 mol% or less.

9. The calcined body according to claim 7 or 8,
wherein a rate of change in thermal shrinkage rate per unit temperature at 1,500°C is 0.02%°C$^{-1}$ or more.

10. The calcined body according to any one of claims 7 to 9,
wherein the stabilizing element is one or more selected from the group consisting of yttrium, calcium, and magnesium.

11. The calcined body according to any one of claims 7 to 10,
wherein a proportion of a tetragonal phase and a cubic phase in a crystalline phase is 75% or more.

12. A method for producing a sintered body, the method comprising:
using the powder composition according to any one of claims 1 to 6 or the calcined body according to any one of
claims 7 to 11.

13. A sintered body in a state in which the powder composition according to any one of claims 1 to 6 is sintered.

14. A sintered body in a state in which the calcined body according to any one of claims 7 to 11 is sintered.

15. A sintered body comprising, as a matrix, a stabilized zirconia containing a stabilizing element,
wherein a content of the stabilizing element is more than 4.0 mol% and 5.8 mol% or less, an average crystal grain
size is 2.5 μm or less, a difference in crystal grain size is 0.10 μm or less, and a tetragonal prime phase fraction is
70% or more.

# Fig.1

**Fig.2**

*Fig.3*

Fig.4

## Fig.5

## INTERNATIONAL SEARCH REPORT

<table>
<tr><td></td><td>International application No.<br><br>**PCT/JP2022/034621**</td></tr>
</table>

### A.   CLASSIFICATION OF SUBJECT MATTER

*C04B 35/486*(2006.01)i; *A61C 5/70*(2017.01)i; *A61C 13/083*(2006.01)i; *C01G 25/02*(2006.01)i
FI:   C04B35/486; C01G25/02; A61C5/70; A61C13/083

According to International Patent Classification (IPC) or to both national classification and IPC

### B.   FIELDS SEARCHED

Minimum documentation searched (classification system followed by classification symbols)

C04B35/486; A61C5/70; A61C13/083; C01G25/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
|---|---|---|
| X | JP 2011-073907 A (WORLD LAB KK) 14 April 2011 (2011-04-14)<br>    paragraphs [0015], [0070], table 5, example 40 | 1, 2, 4, 6-8, 10-14 |
| A | | 3.5.9, 15 |
| A | JP 2018-052806 A (TOSOH CORP) 05 April 2018 (2018-04-05)<br>    entire text, all drawings | 1-15 |
| A | JP 2021-059489 A (TOSOH CORP) 15 April 2021 (2021-04-15)<br>    entire text, all drawings | 1-15 |
| A | JP 2015-196624 A (TOSOH CORP) 09 November 2015 (2015-11-09)<br>    entire text, all drawings | 1-15 |

☐ Further documents are listed in the continuation of Box C.      ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **09 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2022/034621** |

| Patent document cited in search report | | | Publication date (day/month/year) | Patent family member(s) | | | Publication date (day/month/year) |
| --- | --- | --- | --- | --- | --- | --- | --- |
| JP | 2011-073907 | A | 14 April 2011 | (Family: none) | | | |
| JP | 2018-052806 | A | 05 April 2018 | (Family: none) | | | |
| JP | 2021-059489 | A | 15 April 2021 | US entire text, all drawings EP CN KR | 2021/0101838 3805185 112624761 10-2021-0042019 | A1 A1 A A | |
| JP | 2015-196624 | A | 09 November 2015 | (Family: none) | | | |

Form PCT/ISA/210 (patent family annex) (January 2015)

**REFERENCES CITED IN THE DESCRIPTION**

**Patent documents cited in the description**

- JP 2015143178 A
- JP 2021059489 A
- JP 2018056330 A
- JP 2020033338 A
- JP 2021150878 A